(19) Europäisches Patentamt
European Patent Office
Office européen des brevets

(11) EP 3 825 345 A1

(12) EUROPEAN PATENT APPLICATION

(43) Date of publication:
**26.05.2021 Bulletin 2021/21**

(21) Application number: **19306489.6**

(22) Date of filing: **19.11.2019**

(51) Int Cl.:
*C08G 65/40* (2006.01)
*B29B 13/02* (2006.01)
*B29C 67/04* (2017.01)
*B33Y 70/00* (2020.01)
*C08J 3/12* (2006.01)
*C08J 5/12* (2006.01)
*C08L 71/00* (2006.01)
*C08L 71/12* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicants:
- **ARKEMA FRANCE**
  **92700 Colombes (FR)**
- **EOS GmbH Electro Optical Systems**
  **82152 Krailling (DE)**

(72) Inventors:
- **BRULE, Benoît**
  **27470 SERQUIGNY (FR)**
- **DECRAEMER, Nadine**
  **27470 SERQUIGNY (DE)**
- **FRÖHLICH, Daniel**
  **82166 GRÄFELFING (DE)**
- **GALITZ, Verena**
  **82152 KRAILLING (DE)**
- **TUTZSCHKY, Sabine**
  **82229 SEEFELD (DE)**
- **PFISTER, Andreas**
  **90763 FÜRTH (DE)**

(74) Representative: **Beckord & Niedlich Patentanwälte PartG mbB**
**Marktplatz 17**
**83607 Holzkirchen (DE)**

(54) **IMPROVED POWDER FOR ADDITIVE MANUFACTURING**

(57) The invention is about a composition comprising at least one polymer, wherein the polymer is in the form of a powder, and wherein the polymer comprises at least one thermoplastic polymer, wherein the thermoplastic polymer is selected from at least one polyaryletherketone and/or a copolymer and/or a block-copolymer and/or a polymer blend thereof, wherein the composition has a melt volume rate (MVR) of at least 5 $cm^3$/10 min and a process of manufacturing and a use thereof. The invention also deals with a process for the manufacture of a construction element and the construction element thereof.

EP 3 825 345 A1

## Description

The present invention relates to a composition comprising at least one thermoplastic polymer, wherein the composition exhibits a specific melt volume rate to allow for an optimised additive manufacturing process. Further, the present invention is directed to a process for the manufacturing of the inventive composition and to a device comprising the inventive composition and the use of the inventive composition.

Additive manufacturing processes for the industrial production of prototypes and devices on the basis of powdery construction material allows for the manufacture of plastic articles and continually gain importance. By using the manufacturing processes, layers are selectively melted and solidified, respectively the desired structures are manufactured by applying a binder and/or adhesive. The process is also referred to as "additive manufacturing", "digital fabrication" or "three-dimensional (3D) printing".

Processes for industrial development for the manufacture of prototypes (rapid prototyping) are used since decades. However, by technologic progress of the systems, the production of parts to satisfy the qualitative requirements of final products instead of or additional to prototypes has started (rapid manufacturing), i. e. the technical progress of the systems now also allows the production of parts that meet the qualitative requirements for final products.

In practice, the term "additive manufacture" is often replaced by the term "generative manufacture" or "rapid technology". Processes which are encompassed by additive manufacturing to use powdery material are, e. g., sintering, melting or gluing by a binder.

Often, polymer systems are used as powdery materials for the manufacture of articles. Industrial users of such polymer systems request good processability, accuracy to shape and good mechanical properties of the articles manufactured by such systems.

For the purpose of the manufacturing of such articles, it is advantageous to obtain a bonding of the melted mass with the subjacent layers of the 3D structure, as interdiffusion can take place only in the melted mass. If, though, bonding of the layer/s is insufficient due to insufficient melting properties of the polymer, the 3D articles tend to delaminate and to lose stability. Hence, the building temperature during manufacturing should be guided to optimise melting properties of the polymer during manufacturing.

Thus, during manufacture of 3D articles, a building temperature is required above crystallisation temperature of the polymer. On the other hand, in order for the powder cake to not melt in the building area, the building temperature is essentially required to be below melting temperature. Generally, the temperature range applicable for building an object by additive manufacturing is named process window or sinter window of the polymer, respectively.

It is thus an object of the present invention, to foresee a composition being suitable for use as a material in an additive manufacturing process for the production of articles to exhibit a process-safe mechanical stability and a high accuracy of shape. In particular, it is an object of the present invention to provide a composition to exhibit an optimal process window and melting properties.

According to the invention, such an object is solved by a composition as to claim 1, to comprise at least one polymer having a defined melt volume rate. Further, the object is solved by a process for the manufacture of a composition as to claim 18, by a process for the manufacture of an object as to claim 20 and a use of the inventive composition as to claim 24.

The present invention is thus directed to a composition, in particular to a building material for an above-mentioned additive manufacturing process, comprising:

at least one polymer,

wherein the polymer is in the form of a powder, and

wherein the polymer comprises at least one thermoplastic polymer,

wherein the thermoplastic polymer is selected from at least one polyaryletherketone as well as a copolymer and/or block-copolymer and/or a polymer blend thereof,wherein the composition has a melt volume rate (MVR) of at least 5 $cm^3$/10 min, more preferred at least 10 $cm^3$/10 min, and/or not more than 55 $cm^3$/10 min, preferably not more than 40 $cm^3$/10 min, more preferred not more than 30 $cm^3$/10 min, particularly preferred not more than 26 $cm^3$/10 min, mostly preferred not more than 24 $cm^3$/10 min.

Preferably, the powder is a primary powder.

In its simplest embodiment, an inventive composition comprises a polymer or a polymer system, respectively, being selected from a thermoplastic polymer.

According to the present invention the "composition" as used herein may comprise one or more additive/s. The term "additive" as used herein refers to a substance which may be, in particular, an amorphous and/or semicrystalline

and/or crystalline polymer, a polyol, a tenside and/or a protecting colloid.

The term "powder" as used herein refers to a bulk solid composed of fine particles that may flow freely when shaken or tilted. According to the present invention such fine particles have a particle size d50 of less than 500 μm.

According to the present invention, the composition exhibits a melt volume rate (MVR) of at least about 5 $cm^3$/10 min, more preferred at least about 10 $cm^3$/10 min, particularly preferred at least about 15 $cm^3$/10 min, mostly preferred at least about 20 $cm^3$/10 min and/or not more than about 55 $cm^3$/10 min, more preferred not more than about 40 $cm^3$/10 min, particularly preferred not more than about 30 $cm^3$/10 min, particularly preferred not more than about 26 $cm^3$/10 min, and mostly preferred not more than about 24 $cm^3$/10 min. The term "about" or "approximately" (approx.) as used herein means that the specified number or range may vary up to 10 - 15 %.

The term "melt volume rate (MVR)" (*syn.* melt volume index, MVI) as used herein is a measure of the ease of flow of the melt of a thermoplastic polymer. It is defined as the volume of polymer in $cm^3$, flowing in ten minutes through a capillary of a specific diameter and length by a pressure applied via prescribed alternative gravimetric weights for alternative prescribed temperatures. The MVR is reported in $cm^3$/10 min. The method is described, e. g., in ASTM D1238-10.

The MVR measurement for such polymers of the class of polyaryletherketones (PAEK), in particular PEKK, is carried out on the device of Ceast with the software Ceast-View 6.3.1. Before the measurement, the powder (4.8 g) is pre-dried with the Sartorius MA100 thermo-balance at 120 °C for 11 minutes. The powder is then filled into the MVR unit within 30 seconds. A weight of 5 kg is applied and the measurement is carried out according to ASTM D1238-10 at 380 °C.

Surprisingly, according to the invention, the advantageous composition exhibits superior flowability and melting properties and a homogenous structure of the bulk material, e. g. of a powder, to result in improved rheological characteristics such as viscosity, therefore allowing for improved material deposition and mechanical properties. Good flowability of a bulk material is assumed, when the bulk material is flowing free and easily.

The term "flowability" as used herein is used synonymously to the term "pourability". Pourability of a powder is measured according DIN EN ISO 6186 using a mm funnel and/or by shear cell according to ASTM D 7891-15 and/or Hausner Factor (as described in methods section).

The term "polymer" or "polymer system" as used herein refers to at least one homo- and/or heteropolymer, being constructed from a number of monomers. While homopolymers comprise a covalent linkage of the same monomers, heteropolymers (also named copolymers) comprise different monomers with covalent linking. According to the present invention, a polymer or polymer system may comprise a mixture of the above-mentioned homo- and/or heteropolymers or may comprise more than one polymer system, respectively. In the present application, such a mixture is named polymer blend.

Within the context of the present invention, heteropolymers may be selected from statistic copolymers to comprise monomers with random allocation; from gradient copolymers being principally similar to statistic copolymers, in which, though, the content of a monomer within a chain increases or decreases; from alternate copolymers to comprise alternating monomers; from block copolymers or segment copolymers containing longer sequences or blocks of each monomer; and from graft copolymers, in which the block of each monomer is grafted onto the frame of a different monomer.

Advantageously, the inventive composition can be used for additive manufacturing processes. Within the context of the present application, additive manufacturing processes comprise, in particular, processes which are suitable for the manufacture of prototypes (rapid prototyping) and articles (rapid manufacturing), preferably from the group of powder bed processes comprising laser sintering, highspeed sintering, multi-jet fusion, binder jetting, selective mask sintering or selective laser melting. In particular, the inventive composition can be used for laser sintering. The term "laser sintering" as used herein is similarly used to the term "selective laser sintering"; the latter one representing the older naming.

Further, the present invention is directed to a process for the manufacture of the inventive composition, wherein the process comprises the following steps:

(i) providing at least one polymer, wherein the thermoplastic polymer is selected from at least one polyaryletherketone and/or a copolymer and/or block-copolymer and/or a polymer blend thereof,

(ii) optionally grinding of the polymer,

(iii) optionally rounding of the polymer particles, preferably by thermo-mechanical treatment, in a mixer, at a temperature of at least 30°C and below the melting point Tm of the polymer.

The term "providing" as used herein refers to the manufacture of the polymer or polymer system taking place on site and/or, alternatively or additionally, the polymer or polymer system is supplied from an external site.

Preferably, grinding of the polymer pellets or polymerisation flakes from the polymerization process is performed to obtain polymer particles. Such polymerisation flakes are coarse porous shavings obtained from the polymerisation

proces. Preferably, such a powder has a BET-surface of more than 1$m^2$/g. When using polymer pellets, such a grinding step is preferably conducted below room temperature, even more preferably by adding liquid nitrogen. Advantageously, the use of liquid nitrogen results in a higher yield of powder (of a certain particle size).

In order to obtain particles of round shape, the polymer particles are treated, preferably by thermo-mechanical treatment. Such a treatment is performed in a mixer, preferably in a high-speed mixer, at a preferred temperature of at least 30 °C and below melting point Tm of the polymer.

As follows, the terms mixing, admixing, blending and compounding are used synonymously. A process of mixing, admixing, blending and compounding may be conducted by extrusion in an extruder, kneader, dispergator and/or in a stirrer and comprises, where appropriate, one or more operations such as melting, dispersing etc.

In case the inventive composition is to be packaged, such a packaging process is preferably conducted under exclusion of humidity or at defined humidity conditions, respectively.

A composition manufactured according to the inventive process is advantageously used as powder material to be solidified in a process for the layered manufacture of a three-dimensional object, whereby consecutive layers of the object are sequentially produced from the powder to be selectively solidified at predetermined sites by means of energy, preferably by means of electromagnetic radiation, particularly preferred by means of laser light.

Further, the present invention is directed to a composition, in particular for laser sintering, obtained or obtainable by the before mentioned process.

Finally, the inventive composition is used for the manufacture of an object, in particular of a three-dimensional object, by layered application and selectively solidifying a construction material, preferably a powder. The term "solidifying" as used herein refers to an at least partial melting and subsequent solidification or re-solidification of the construction material, respectively and may also be named sintering.

An advantageous process for the manufacture of a construction element, preferably a 3D object, comprises at least the following steps:

(i) applying a layer of a composition according to the invention and/or a composition manufactured according to the inventive manufacturing process, preferably of a powder, onto a production panel,

(ii) selectively solidifying the applied layer of the composition at sites representing a cross section of the object to be manufactured, preferably by using an irradiation unit, and

(iii) lowering the carrier and repeating the steps for applying and solidifying until the construction element, preferably the 3D object, is finished.

The term "construction material" as used herein preferably refers to a powder or a powder material, which, by means of an additive manufacturing process, preferably by applying a powder bed process, in particular by means of laser sintering or laser melting, is suitably solidified to form construction elements or 3D objects, respectively. The above described inventive composition is particularly suited as construction material.

Preferably, the process or part of the process for the manufacture of a construction element, takes place under nitrogen atmosphere.

A production panel according to the present invention refers to a plate, placed on a carrier within a machine for additive manufacturing and being positioned in a predefined distance to a radiation unit, which is suitable for solidifying of the carrier material. The construction material is applied onto the panel such that its upper layer corresponds to the level to be solidified. The carrier may, during the course of construction, in particular during laser sintering, be adjusted such that the most recently applied layer of the construction material has the same distance to the radiation unit, preferably to the laser, thereby being solidified by exposure to the irradiation unit.

An article, in particular a 3D object, produced from the inventive composition exhibits an advantageous tensile strength and elongation at break. The term "tensile strength" as used herein refers to the measurement of the maximum force required to pull a material to the point of break. The determination of tensile strength is known to the person skilled in the art and may be measured according to DIN EN ISO 527. The term "elongation at break" as used herein refers to the ratio between changed length and initial length after breakage of a test specimen. It expresses the capability of a material to resist changes of shape without crack formation. The determination of the elongation at break may be, e. g., determined as to DIN EN ISO 527-2.

Further, a construction element manufactured from the inventive composition exhibits an improved dimensional stability and/or reduced distortion of shape. The term "dimensional stability" as used herein refers to the degree to which a material maintains its original dimensions when subjected to changes in temperature, pressure, force, altering or humidity. For the process of laser sintering, dimensional stability may be determined by means of distortion of shape of the construction element.

Also, the present invention is directed to a construction element, obtained or obtainable by the above described

process of manufacture.

Use of the inventive composition may be realised by rapid prototyping as well as rapid manufacturing. Hereby, e. g., additive manufacturing processes, preferably from the group of powder bed processes comprising laser sintering, highspeed sintering, binder jetting, selective mask sintering, selective laser melting, in particular laser sintering, are implemented, to preferably produce three-dimensional objects and selectively projecting a laser beam with a predetermined energy onto a layer of powder-like materials. By applying this process, prototypes and construction elements can be produced time- and cost-effectively.

The term "rapid manufacturing" as used herein in particular refers to the manufacture of construction elements, i. e. the production of more than one equal article, for which the production, e. g. by mold assembly, is not economic or is, due to geometric properties of the construction element otherwise more complex or not possible. This is true, over all, when the articles exhibit a complex shape. Examples are elements of high-class cars, racing or ralley cars, which are manufactured only in small numbers, or spare parts for motor sports, for which, beside small numbers, timing of availability are important. Industries, in which the inventive articles can be implemented, are, e. g. aerospace industry, medical engineering, mechanical engineering, automotive industry, sports industry, household goods industry, electro industry or lifestyle, respectively. Of further importance is the production of a number of similar construction elements, e. g., of personalised elements such as prosthesis, (inner ear) hearing devices and the like, for which the geometry can be individually adjusted to the user.

Finally, the present invention comprises a composition in the form of a powder material, suitable for solidifying in a process for the layered manufacture of a three-dimensional object from such powder material, from which consecutive layers of the object are constructed subsequently at specific sites by applying energy, preferably by applying electromagnetic radiation, in particular by the application of laser light.

Further preferred embodiments of the invention are derived from the dependent claims together with the following description, whereby the patent claims of a certain category may be formed by dependent claims of a different category, and features of the different examples may be combined to new examples. It is to be understood that the definitions and explanations of the terms made above and below apply accordingly for all embodiments described in this specification and the accompanying claims. In the following, particular embodiments of the method of the present invention are specified further.

Preferably, the at least one polyaryletherketone is selected from the group of polyetherketoneketone (PEKK), polyetheretherketone (PEEK) and/or from the group of copolymers of PEKK or copolymers of PEEK, such as for example polyetheretherketone-polyetherdiphenyletherketone (PEEK-PEDEK) and/or from the group of polyetheretherketone-polyethermetaetherketone (PEEK-PEmEK).

More preferably, the at least one polyaryletherketone is selected from the group of polyetherketoneketone (PEKK) and/or polyetheretherketone-polyetherdiphenyletherketone (PEEK-PEDEK) and/or polyetheretherketone-polyethermetaetherketone (PEEK-PEmEK), as follows:

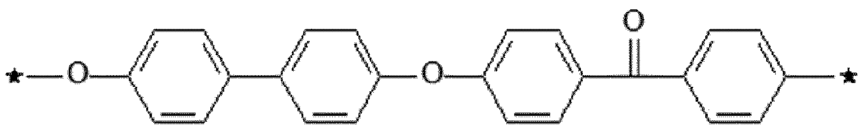

PEDEK

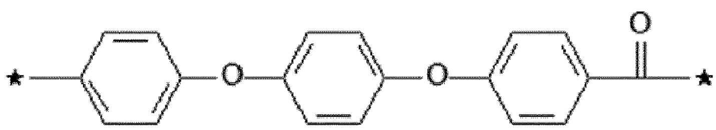

PEEK

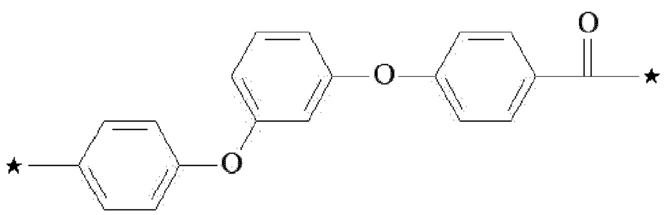

PEmEK

Further preferred, the at least one polymer is selected from at least one homo- and/or heteropolymer and/or polymer blend, wherein the at least one homo- and/or heteropolymer and/or polymer blend preferably comprises a semicrystalline homo- and/or heteropolymer and/or amorphous homo- and/or heteropolymer. Particularly preferred, the at least one homo- and/or heteropolymer and/or polymer blend is selected from at least one semicrystalline polymer or semicrystalline polymer blend of at least one semicrystalline polymer and at least one further semicrystalline polymer

or semicrystalline polymer blend of at least one semicrystalline polymer and amorphous polymer.

The term "semicrystalline" as used herein is understood as a substance which comprises crystalline and amorphous regions. A polymer is considered essentially amorphous, if the degree of crystallinity in the solid phase of the polymer is about 5 wt.-% or less, in particular about 2 wt.-% or less. In particular, a polymer is considered essentially amorphous, if, by dynamic differential calorimetry (DSC) no melting point can be determined and/or melt enthalpy is below 1 J/g in the first heat. A semicrystalline substance can contain up to 70 wt.-%, preferably up to 90 wt.-%, particularly up to 95 wt.-%, crystalline regions.

Preferably, the heteropolymer or copolymer, respectively, comprises at least two different repeat units and/or at least a polymer blend on the basis of the before mentioned polymers and copolymers. Advantageously, such a heteropolymer or copolymer and/or polymer blend is semicrystalline.

By using one or more of the above-mentioned polymers (homopolymers, copolymers or polymer blends) a material, preferably a powder material, can be produced, which is at least partly semicrystalline.

An advantageous composition preferably comprises a polymer and/or a copolymer and/or a polymer blend having a melting temperature of at least about 120 °C, preferably of at least about 150 °C, particularly preferred of at least about 180 °C. However, the melting temperature of a preferred polymer and/or a copolymer and/or a polymer blend is not more than about 320 °C, preferably not more than about 300 °C, particularly preferred not more than about 280 °C.

The term "melting temperature" as used herein refers to the temperature or temperature range, at which a substance, preferably a polymer, copolymer or polymer blend passes from solid state to liquid state.

Alternatively or additionally, an advantageous composition comprises a polymer and/or copolymer and/or polymer blend having a glass transition temperature Tg of at least about -10°C, preferably of at least about 50°C, more preferably of at least about 90°C, particularly preferred of at least about 120°C and/or not more than about 250 °C, preferably not more than about 225 °C, more preferably not more than about 200 °C, particularly preferred not more than about 175 °C.

The term "glass transition temperature" as used herein refers to the temperature, at which a polymer changes to a gum-like viscous state. The determination of the glass transition temperature is known to the person skilled in the art and may be performed, e. g., by DSC (according to DIN EN ISO 11357).

According to a preferred embodiment and advantageous composition has an extrapolated starting temperature of the melting peak $T_{eim}$, which is increased by at least 1 °C, preferably by at least 5 °C, in comparison to a thermoplastic polymer which is not treated by annealing and/or a difference of $\Delta T_{eim}/Tc$ of the crystallisation temperature (Tc) and the melting temperature (Tm), which is increased by at least 1 °C, preferably by at least 5 °C.

Surprisingly, the inventors have found, that annealing of the composition results in an increase of $T_{eim}$ and/or increase of the difference $\Delta T_{eim}/Tc$, i. e., causes an increase of the process window. The term "process window" as used for the present invention refers to the difference between the lowest possible building temperature (non-curl temperature: NCT) and the highest possible building temperature (upper building temperature: UBT). The terms "crystallisation temperature" and "extrapolated starting temperature of the melting peak" as used herein refer to the peak temperatures as defined in DIN EN ISO 11357.

Methods for the determination of the crystallisation temperature, the melting temperature and the extrapolated starting temperature of melting peak are known by the person skilled in the art and may be conducted by means of dynamic differential calorimetry (DSC) as to DIN EN ISO 11357. In order to allow for a comparison of the measurements of the polymers with or without annealing treatment, the used methods take into account to apply the same holding times, heat rates, start temperature and end temperature.

The degree of crystallisation may be measured by various analytical methods, such as DSC or X-ray diffraction. Hereby, the degree of crystallisation is calculated by the melting enthalpy [J/g] (in comparison to a polymer having a theoretic crystallinity of 100%).

The term "melting enthalpy" as used herein refers to the energy, necessary to melt a substance at its melting temperature and at constant pressure (isobar) from its solid state to its liquid state.

Further, the inventors have surprisingly found, that the process window can be increased, not only by annealing within a specific temperature range below the melting point Tm, but, alternatively or additionally also by variation of the melt volume rate (MVR) of the polymer. Advantageously, within the above-specified MVR range, the process window is at least about 1 °C, preferably at least about 3 °C, more preferably at least about 5 °C and most preferably at least about 9 °C, and/or not more than about 200 °C, preferably not more than about 100 °C, more preferably not more than about 50 °C for a primary powder, i. e., a non-used powder.

According to a preferred embodiment, the above mentioned polyetherketoneketone comprises the following repeat units

repeat unit A

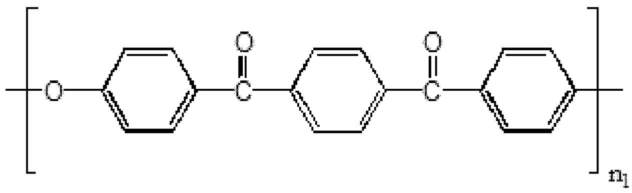

repeat unit B

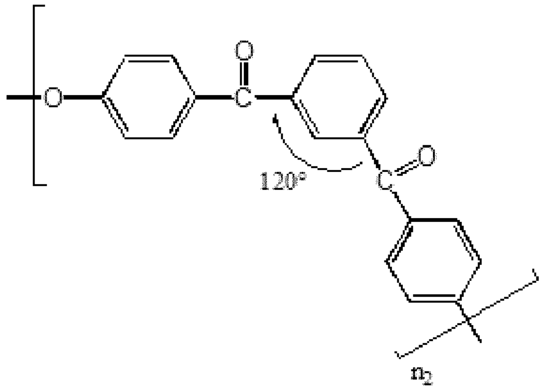

wherein the ratio of the repeat unit A to the repeat unit B is preferably between approx. 80:20 to 10:90, preferably 70:30 to 40:60, particularly preferred 60:40.

According to a particularly preferred embodiment, the polyaryletherketone has a melting temperature Tm of at least 250 °C, preferably at least 260 °C, particularly preferred at least 270 °C, and/or up to 320 °C, preferably of up to 310 °C, particularly of up to 300 °C, and/or wherein the polyaryletherketone has a glass transition temperature Tg of at least 120 °C, preferably of at least 140 °C, particularly preferred of at least 150 °C.

According to a next preferred embodiment, a polyetherimide preferably comprises repeat units according to

formula I

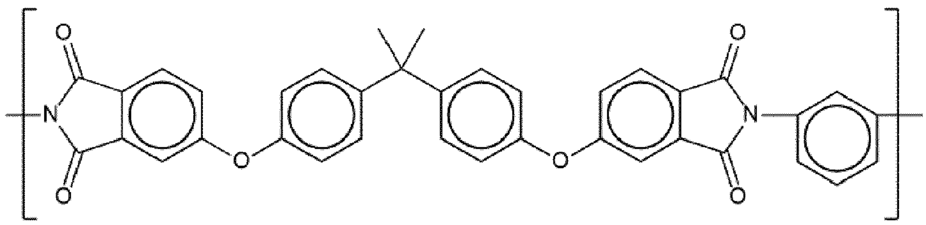

and/or repeat units according to

formula II

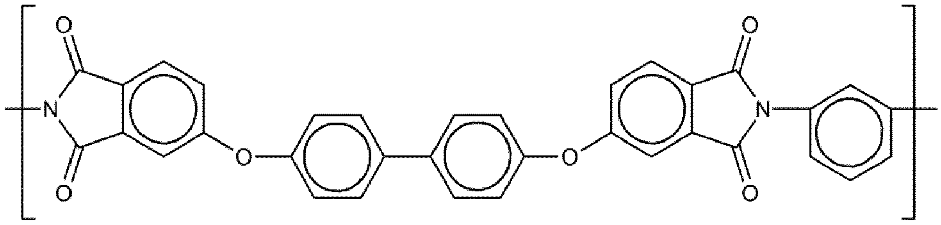

and/or repeat units according to

formula III

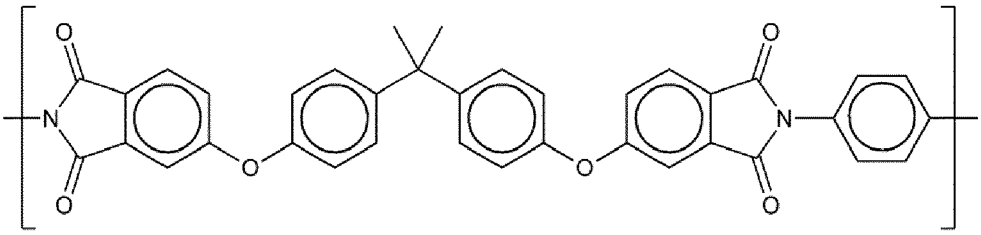

.

According to a next preferred embodiment the polymer blend comprises a polyaryletherketone-polyetherimide.

Even more preferably, the polyaryletherketone comprises a polyetherketoneketone with a ratio of repeat unit A to repeat unit B

repeat unit A

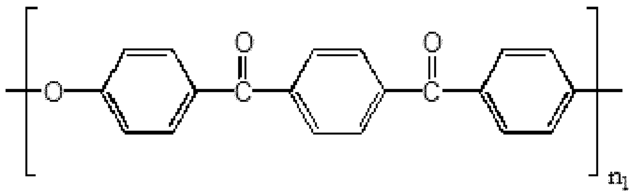

repeat unit B

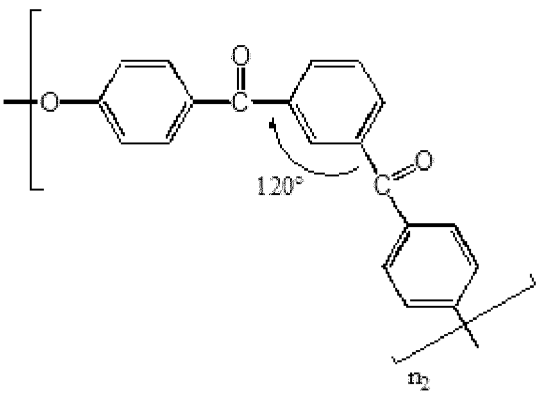

of 60:40,

and/or the polyetherimide comprises repeat units of

formula I

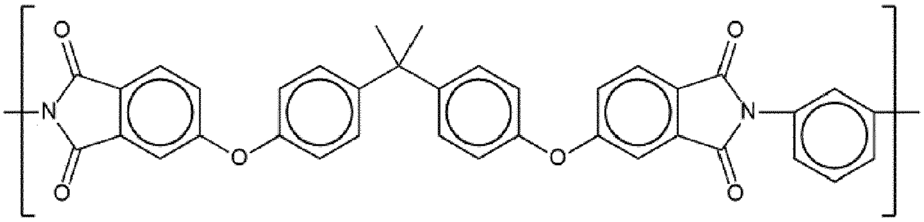

A further preferred composition comprises a polyetherketoneketone with the following repeat units:

repeat unit A

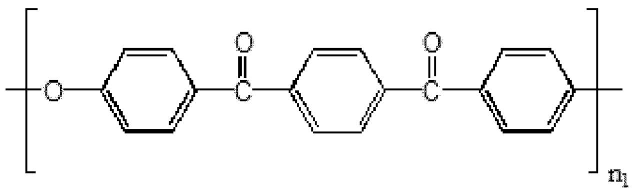

repeat unit B

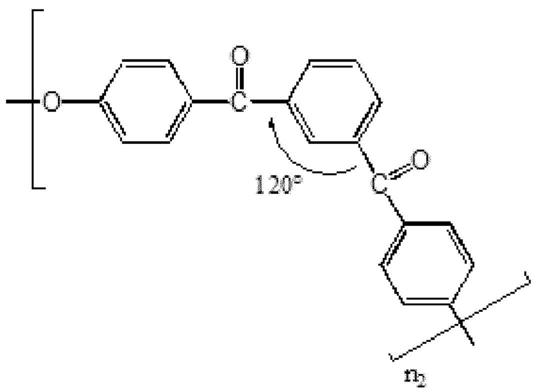

Preferably, the ratio of 1,4-phenylene units in repeat unit A to 1,3-phenylene units in repeat unit B is from 90:10 to 10:90, more preferably from 70:30 to 10:90, in particular from 60:40 to 10:90, mostly preferred about 60:40. The number $n_1$ or $n_2$, of repeat unit A or repeat unit B, respectively, may be preferably at least 10 and/or not more than 2 000.

Further preferred, the the viscosity number of the polymer is from 0.7 to 1.2 dl/g, preferably from 0.78 to 1.1 dl/g, as measured in a 96 %-wt. sulfuric acid solution at 25°C according to ISO 307, applied to PAEK.

For example, a preferred polyetherketoneketone polymer may be obtained under the series of trade name Kepstan 6000 (Arkema, France).

According to a further preferred embodiment, the polyaryletherketone has a melting temperature Tm of at least 250 °C, preferably of at least 260 °C, particularly preferred of at least 270 °C, and/or up to 320 °C, preferably of up to 310 °C, particularly of up to 300 °C.

Further, a preferred polyaryletherketone has a glass transition temperature Tg of at least about 120 °C, preferably of at least about 140 °C, particularly preferred of at least about 150 °C and/or not more than about 200 °C, preferably not more than about 180°C, particularly preferred not more than about 170°C.

According to a next preferred embodiment, the polyetherketoneketone has an extrapolated starting temperature

of melting ($T_{eim}$) of at least 250 °C, preferably of at least 260 °C, particularly preferred of at least 265 °C, and/or up to 285 °C, preferably up to 280 °C, particularly up to 275 °C.

Determination of the melting temperature Tm and the extrapolated starting temperature of melting peak ($T_{eim}$) can be performed, e. g., by means of DSC (Differential Scanning Calorimetry). The corresponding DSC measurement for the determination of Tm and $T_{eim}$ are preferably carried out according to DIN EN ISO 11357 (determined by the first heating curve of the DSC) on a device such as Mettler Toledo DSC 823 (for PAEK, in particular PEKK, initial temperature is 0 °C, maximum temperature is 360 °C and minimum temperature is 0 °C; heating or cooling rate: 20K / min, weight: 4.5 mg to 5.5 mg).

Such a melting temperature and/or glass transition temperature of the at least one polyaryletherketone advantageously allows for improved melting and bonding properties, in particular for laser sintering, thus resulting in improved mechanical properties of the construction elements manufactured from such a polymer.

In a next preferred composition, the thermoplastic polymer is selected from at least one polyetherimide. Particularly preferred, such a polyetherimide comprises repeat units of

formula I

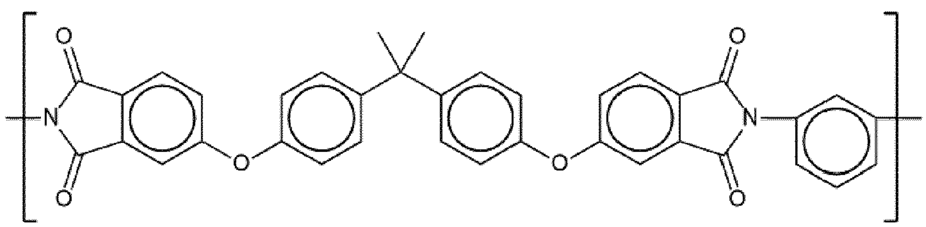

and/or repeat units of

formula II

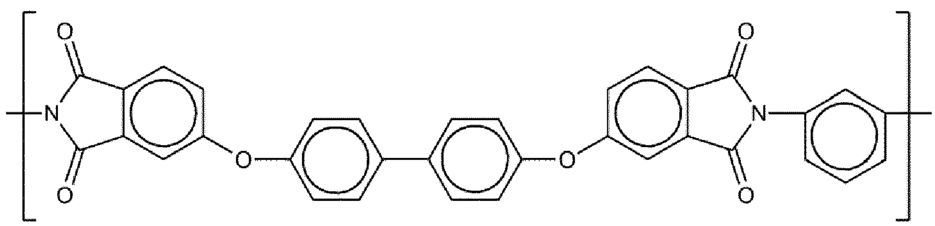

and/or repeat units of

formula III

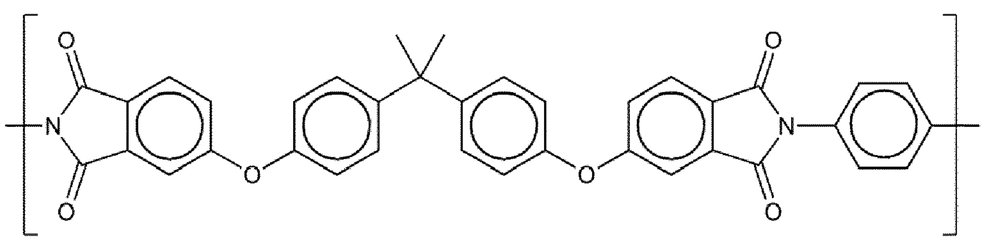

The number n of repeat units of formula I, II and III is preferably at least 10 and/or not more than 1 000.

Preferably, the number average molecular weight (Mn) of such a polyetherimide is at least 10 000 D, preferably at least 15 000 D and/or not more than 200 000 D, particularly preferred at least 15 000 D and/or not more than 100 000 D. The weight average molecular (Mw) of such a preferred polymer is preferably at least 20 000 D, more preferred

at least 30 000 D and/or not more than 500 000 D, particularly preferred at least 30 000 D and/or not more than 200 000 D.

A preferred polyetherimide as to formula I may be obtained under the trade name Ultem® 1000, Ultem® 1010 and Ultem® 1040 (Sabic, Germany); a preferred polyetherimide of formula II is availabe under the trade name Ultem® 5001 and Ultem® 5011 (Sabic, Germany).

A further preferred composition comprises a polymer blend containing a polyaryletherketone-polyetherimide, preferably a polyetherketoneketone with a ratio of repeat units A to repeat units B of 60:40. The preferred composition may further comprise a polyetherimide, preferably containing repeat units of formula I.

As mentioned above, the advantageous composition may comprise one or more additive/s. According to a preferred embodiment, the additive may be a semicrystalline polymer and/or a semicrystalline polyol and/or a semicrystalline tenside and/or a semicrystalline protective colloid. Preferably, the additive is water soluble and/or not miscible with the at least one thermoplastic polymer at room temperature.

Advantageously, the additive suitably prevents caking of the polymer particles and formation of cavities during pouring of the composition during the additive manufacturing process, thereby positively increasing bulk density of the composition.

The term "bulk density" as used herein refers to the mass of many particles of the material divided by the total volume they occupy. The total volume includes particle volume, inter-particle void volume, and internal pore volume. The determination of bulk density is known to the person skilled in the art and may be conducted according to DIN EN ISO 60:2000-01.

According to a preferred embodiment, the composition has a bulk density of at least about 30 $kg/m^3$ and/or not more than about 65 $kg/m^3$, preferably of at least 35 $kg/m^3$ and/or not more than 55 $kg/m^3$, in particular of at least 40 $kg/m^3$ and/or not more than 50 $kg/m^3$.

In case the composition comprises a polyaryletherketone manufactured by grinding from polymerization flakes, such a composition preferably exhibits a bulk density of at least about 30 $kg/m^3$ and/or not more than about 50 $kg/m^3$, preferably of at least 32 $kg/m^3$ and/or not more than 45 $kg/m^3$, in particular of at least 34 $kg/m^3$ and/or not more than 40 $kg/m^3$. This is particularly preferred, if the composition was manufactured from polymerisation flakes.

Generally, for a composition used for laser sintering, a particular particle size or particle size distribution, respectively, a suitable bulk density and sufficient pourability is of importance.

The term "particle size" as used herein refers to the size of single particles in the composition. Hereby, the particle size distribution has an influence on the properties of a bulk material, present in a pourable form, such as a composition present in powder form.

According to a further preferred embodiment, the polymer particles of the composition have a particle size distribution as follows:

- d10 = at least 10 μm, preferably at least 20 μm and/or not more than 50 μm, preferably not more than 40 μm
- d50 = at least 25 μm and/or not more than 100 μm, preferably at least 30 μm and/or not more than 80 μm, in particular of at least 40 μm and/or not more than 60 μm
- d90 = at least 50 μm and/or not more than 150 μm, preferably not more than 120 μm.

Methods for the determination of particle- or particle size distribution, respectively, are known to the person skilled in the art and may be determined according to DIN ISO 13322-2.

A particularly preferred composition comprises polymer particles selected from polyaryletherketone, wherein the polymer particles of the composition have a particle size distribution as follows:

- d10 = at least 15 μm, preferably at least 20 μm, in particular at least 25 μm and/or not more than 50 μm, preferably not more than 40 μm in particular not more than 30 μm
- d50 = at least 40 μm and/or not more than 100 μm, preferably at least 45 μm and/or not more than 80 μm, in particular of at least 50 μm and/or not more than 65 μm
- d90 = at least 70 μm and/or not more than 150 μm, preferably at least 80 μm and/or not more than 130 μm, more preferably not more than 120 μm, particularly preferred not more than 110 μm.

Even more preferred, such preferred polyaryletherketone powders are obtained by milling of polymerisation flakes.

According to a further preferred embodiment, an advantageous composition exhibits a distribution width (d90-d10)/d50 of not more than 3, preferably of not more than 2, particularly of not more than 1.5, particularly preferred of not

more than 1.

A further preferred composition comprises a fine content of not more than about 5 wt.-%, preferably of not more than about 3 wt.-%, particularly preferred of not more than about 2 wt.-% and mostly preferred of not more than 1 wt.-%. The term "fine content" as used herein refers to particles having a particle size of less than 10 μm.

The polymer particles of the inventive composition preferably exhibit an essentially spherical to lenticular shape. Particularly preferred, the polymer particles exhibit a sphericity of at least about 0,8, preferably of at least about 0,85, particularly preferred of at least about 0,90 and mostly preferred of at least about 0,95. Determination of sphericity may be, e. g., performed by microscopy according to DIN ISO 13322-1 and/or according to DIN ISO 13322-2 (on a Camsizer XT device (Retsch Technology, Deutschland)).

According to a particularly preferred embodiment, an advantageous composition has a pourability (measured with a 25 mm funnel according to DIN EN ISO 6186) of at least 1 sec, preferably of at leat 2 sec, most preferably of at least 3 sec and/or not more than 12 sec, preferably not more than 9 sec, most preferably not more than 8

A further particularly preferred composition shows a Haussner Factor of at least 1.01 and/or not more than 1.7, preferably not more than about 1.5, more preferably not more than about 1.4, particularly preferred not more than about 1.3, even more preferred not more than about 1.2, mostly preferred not more than about 1.18.

It has been further found advantageous for the polymer particles of an inventive composition to exhibit a small surface area. The surface of such polymer particles may be determined, e. g., by gas adsorption according to Brunauer, Emmet and Teller (BET) (as to DIN EN ISO 9277. The particle surface measured according to this method is also called BET-surface.

According to a preferred embodiment, the BET-surface of an advantageous composition is at least about 0,1 $m^2/g$ and/or not more than about 10 $m^2/g$, preferably not more than 5 $m^2/g$, more preferably not more than 2 $m^2/g$, particularly preferred not more than 1,5 $m^2/g$, mostly preferred not more than 1 $m^2/g$. In particular, such a composition comprises polymer particles selected from polyaryletherketone.

In case the polyaryletherketone particles are manufactured from polymerization flakes, which is particularly preferred, such polyaryletherketone particles preferably have a BET-surface of at least 0,5 $m^2/g$. Particularly preferred, such polyaryletherketone particles are obtained by grinding.

The inventive process for the manufacturing of the composition has been illustrated initially. According to a further preferred embodiment for the manufacture of the composition, the polymer is preferably selected from a polyaryletherketone or its copolymers or blends with other polymers, more preferably in the form of a powder. Particularly preferred, the polymer is provided in the form of polymerisation flakes from the polymerisation process.

The manufacturing of an advantageous composition may comprise the step of, e. g., melt dispersion of the polymer as provided in the above described step i) in an additive, e. g. a dispersant. Preferably, such a dispersant is selected from a polyol, more preferably from a semicrystalline polyol. In particular, such a polyol is selected from at least one semicrystalline polyethylenglycol and/or at least one semicrystalline polyethylenoxide and/or at least one polyvinylalcohol, particularly preferred from at least one semicrystalline polyethylenglycol. Preferably, removal of such an additive or dispersant, respectively, is conducted by centrifugation and/or filtration.

The dispersion step, preferably the melt dispersion, is conducted in a dispersion apparatus, more preferably in an extruder. Alternatively, the dispersion step, may be conducted in a kneader. Preferably, the dispersion apparatus comprises, particularly in advance direction, several consecutive zones.

In a further process a separation of the polymer or polymer particles, respectively, from the mixture or the dispersion may be followed by a washing and/or drying step of the separated polymer or polymer particles.

A separation of the components of the mixture or the dispersion, respectively, is preferably performed by centrifugation and/or filtration. A drying of the solid composition to obtain the dried composition can be realised, e. g., in an oven such as a vacuum drier.

Alternatively or additionally, an advantageous composition can be obtained by melt compounding of the polymer as provided in step i), further processing the polymer by spinning a fibre and chopping the fibre to micro-pellets.

Alternatively or additionally, an advantageous composition can be obtained by melt compounding the polymer as provided in step i) and spraying the melt in a melt spraying process, preferably by applying high pressure through a nozzle.

Alternatively or additionally, an advantageous composition can be obtained by dissolving the polymer in a solvent, preferably at elevated temperature, and precipitating the polymer from the solvent in order to form of a powder, preferably by cooling and stirring.

According to a particularly preferred embodiment, the advantageous process for the manufacture of a composition further comprises a (subsequent) step of annealing the polymer particles at a temperature above Tg and below Tm. Preferably, annealing of the polymer particles, is conducted in a furnace.

The annealing step may be performed in the same step as the above described rounding step. Alternatively, annealing may be performed before or even after rounding of the polymer particles.

According to a particularly preferred embodiment, annealing of the polymer, in particular of PAEK, is performed

in the same step as rounding of the polymer. Such a particularly preferred process is preferably conducted at an annealing temperature of at least about 30 °C, more preferred at least about glass transition temperature of the polymer, and/or not more than about melting temperature of the polymer.

Also, the present invention is directed to a composition, in particular to a composition comprising a PAEK polymer, obtained or obtainable by an above described process to comprise such an annealing step.

According to a mostly preferred embodiment, the process for the manufacture of an advantageous composition comprises the step of annealing the polymer particles, preferably the PEKK particles, at a preferred temperature of at least about 250 °C, more preferably of at least about 260 °C, particularly preferred of at least about 265°C and/or preferably of not more than 285 °C, more preferably of not more than 280 °C, particularly preferred of not more than 275°C.

In a next step, an advantageous process comprises the addition of an additive. In particular, such an additive is selected from a flow agent. Preferably, addition of the additive, in particular of the flow agent, is performed in a mixer.

The inventive manufacturing of a construction element has been described initially. It has now been surprisingly found by the inventors, that, for the manufacture of a construction element, even more preferably, the advantageous process uses refreshing of the composition. Beneficially, the use of a refreshed composition increases mechanical stability of the construction elements. In addition, use of a refreshed composition favourably results in a cost-efficient manufacturing process.

The term "refreshing of the composition" as used herein refers to a part of the total composition, i. e., of a composition part which has not been previously used in a laser sinter process, to a composition part, which has been used in a laser sinter process at least once. Within the context of the present invention, a composition part which has not been previously used in a laser sinter process is named "primary powder" or "primary composition". A content of such a primary composition is preferably above 10 wt.% and below 50 wt.-%, preferably below 40 wt.-%, particularly preferred below 30 wt.-%, of the total composition.

Even further, it has been surprisingly found that an advantageous process for the manufacture of a construction element, preferably of a 3D object, the above-mentioned step i) of applying the layer is applied by at least a double coating, wherein applying of the layer is subdivided into a step of applying a first layer having a first height H1 and a step of applying a second layer having a second height H2,
wherein the second layer of height H2 is applied onto the first layer of height H1, preferably wherein the height H1 of the first layer equals the height H2 of the second layer.

According to a next preferred embodiment, such a layer has a thickness of preferably at least about 60 μm and/or not more than 120 μm, more preferably of about 100 μm. Surprisingly, bonding of the layers is improved when applying layers of such thickness.

Particularly preferred, a layer of the advantageous process for the manufacture of a construction element uses a roof blade with a preferred angle of 1.9°.

Also, the present invention encompasses a construction element, preferably a 3D object, wherein the construction element is obtained or obtainable by an above described manufacturing process.

Finally, an advantageous process may comprise packaging of the composition. Packaging of a composition manufactured according to the inventive process, in particular of a powder, is preferably performed under exclusion from air humidity. Such a packed material may be stored under reduced humidity to prevent from caking effects, thereby improving storage stability of the inventive composition. In addition, an advantageous packaging material may prevent from acces of humidity, in particular from air humidity, to the inventive composition.

As mentioned above, the inventive compositions are suitable for additive manufacturing processes, in particular for laser sintering processes. Usually, the target area of the irradiation device, in particular of the laser beam, e. g., the powder bed of the additive manufacturing device, is heated prior to use, such that the temperature of the primary powder material is close to its melting temperature and only a marginal energy input is sufficient to increase total energy input for the particles to coalise and to solidify. Thereby, energy absorbing and/or energy reflecting substances may be applied onto the target area of the irradiation unit, such as known from processes of high-speed sintering or multi-jet fusion, respectively.

The term "melting" as used herein refers to the process, at which - during the additive manufacturing process - the powder, e. g., in the powder bed, by input of energy, preferably by electromagnetic radiation, in particular by laser radiation, melts at least partially. Hereby, the inventive composition allows for an at least partial melting and manufacturing of process-safe construction elements with high mechanical stability and accuracy to shape.

It has been found further, that determination of tensile strength and elongation at break are useful as a measure for processability of the inventive composition or the construction elements, respectively, manufactured herefrom.

Accordingly, a further preferred embodiment encompasses a construction element produced by using the inventive composition. Advantageously, such a construction element preferably exhibits a tensile strength in x-y direction of at least about 50 MPa, more preferably of at least about 70 MPa, in particular of at least about 80 MPa, mostly preferred of at least about 90 MPa. An advantageous construction element preferably has a tensile strength of not more than about 150 MPa, more preferably of not more than about 120 MPa, in particular of not more than about 110 MPa.

Alternatively or additionally, such a construction element preferably exhibits an elongation at break of at least about 1 %, more preferably of at least about 2 %, in particular of at least about 2.5, mostly preferred of at least about 3 % and/or preferably not more than about 50 %, more preferably of not more than about 20 %, particularly preferred of not more than about 15 %.

The determination of tensile strength and elongation at break is known to the person skilled in the art and may be performed according to DIN EN ISO 527.

According to a further preferred embodiment, an advantageous composition comprises at least an additive which is preferably selected from one or more flow agents, heat stabiliser, oxidation stabiliser, UV stabiliser, colorants, and infrared absorbers. A preferred content of such an additive in a composition might be at least about 0,005 wt.-%, preferably at least about 0,01 wt.-%, more preferably at least about 0,05 wt.-%, particularly preferred at least about 0,1 wt.-%, most preferably at least about 0,2 wt.-%, and/or the preferred composition may comprise a content of the one or more additive/s of preferably not more than about 3 wt.-%, more preferably of not more that about 2 wt.-%, particularly preferred of not more than about 1 wt.-%, most preferably of not more than about 0,5 wt.-%. A content of such an additive refers to the content of each single additive in the composition.

Other functional additives which can be used preferably in higher amounts of more than 3 wt.-% are selected from the group of softeners, fillers and reinforcing materials and flame retardants like, reinforcing fibers, $SiO_2$ particles, carbon particles, carbon fibres, glass fibres, carbon nanotubes, mineral fibres (e. g. Wollastonit), aramide fibres (in particular Kevlar fibres), glass spheres, mineral fillers, inorganic and/or organic pigments and/or flame retardents (in particular containing phosphate such as ammonium polyphosphate and/or brome and/or other halogens and/or anorganics such as magnesium hydroxide or aluminium hydroxide). Particularly preferred, the additive comprises a reinforcing fibre, in particular a carbon fibre.

Further particularly preferred additives comprise polysiloxanes. Polysiloxanes may be used, e. g. as flow agents to reduce viscosity of the polymer melt and/or in particular as softener in polymer blends.

According to a further preferred embodiment, an advantageous composition comprises at least one flow agent. Such a flow agent, usually present in the form of particles, attaches to the polymer particles, thereby preventing clumping of the composition.

Such a flow agent is preferably selected from the group of metal soaps, preferably from silicon dioxide, stearate, tricalcium phosphate, calcium silicate, aluminum oxide, magnesium oxide, magnesium carbonate, zinc oxide or mixtures thereof. More preferably, the at least one flow agent is selected from silicon dioxide (*syn.* silica). An advantageous composition comprises at least about 0,01 wt.-% and/or not more than about 1 wt.-% of flow agent/s.

Further preferred embodiments of the invention are derived from the dependent claims together with the description, whereby the patent claims of a certain category may be formed by dependent claims of a different category, and features of the different examples may be combined to new examples. It is to be understood that the definitions and explanations of the terms made above and below apply accordingly for all embodiments described in this specification and the accompanying claims. In the following, particular embodiments of the present invention are specified further.

## Examples

### Example 1:

A PEKK with a ratio of terephthalic to isophthalic units of 60:40 was manufactured as follows:
Ortho-dichlorobenzene (1600 g) and 1,4-(phenoxybenzoyl)benzene (EKKE) (65 g) were placed in a 2 L reactor while stirring under a stream of dry nitrogen. The following acid chlorides were added: terephthaloyl chloride (5.4 g), isophthaloyl chloride (22.2 g) and benzoyl chloride (0.38 g). The reactor was cooled to -5 °C. $AlCl_3$ (115 g) was added while keeping the temperature in the reactor below 5 °C. After a homogenization period (about 10 minutes), the reactor temperature was raised by 5 °C per minute up to 90 °C (polymerization started during this temperature increase). The reactor was maintained at 90 °C for 30 minutes and then cooled to 30 °C. 400 g of acidic water (3% HCl) was added slowly so as not to exceed a temperature of 90 °C in the reactor. The reactor was stirred for 2 hours and then cooled to 30°C.

The reaction medium was removed form the reactor and filtration/purification steps are done according the person skilled in the art. After, the purified wet PEKK is dried at 190°C under vacuum (30mbar) overnight. Flakes were obtained.

### Example 2:

The PEKK polymerisation flakes from Example 1 was suitably ground and air classified to a fine powder. The data of the powder is shown in Table A.

**Table A**

| Sample | PSD | | | | | bulk density |
|---|---|---|---|---|---|---|
| Nr. | d10 | d50 | d90 | <10 μm | (d90-d10)/d50 | [g/cm$^3$] |
| 1 | 26,6 | 65,73 | 158,3 | 0,9 | 2,00 | 33,6 |

**Example 3**

A polyetherketoneketone (PEKK) was manufactured as to Example 1 and 2.

The powder was then mixed in a mixer of the type Henschel FML according to Table 1. The mass of the powder is hereinafter referred to as m. Phase 1 refers to the heating phase, i. e., the phase up to the time when the mixture (powder) in the mixer reached the maximum temperature Tmax. Tmax corresponds to the treatment temperature $T_B$. The speed of the mixer in phase 1 is called D1. The duration of phase 1 is called $t_1$. Phase 2 is the holding phase, i. e., the phase during which the temperature reached was maintained. The speed of the mixer in phase 2 is called $D_2$. The duration of phase 2 is called $t_2$.

The names m, Tmax, D1, D2, t1, t2 are used as well in the following examples.

The obtained values for the bulk density S, the BET surface, the fraction of powder particles with a grain size of 10 μm in volume percentage ("% < 10 μm") and the quantiles d10, d50 and d90 of the particle size distribution are given in Table 2.

**Table 1**

| Nr. | $T_{max}$ [°C] | m [kg] | $D_1$ [m/s] | $D_2$ [m/s] | $t_1$ [min] | t2 [min] | $t_1 + t_2$ [min] |
|---|---|---|---|---|---|---|---|
| 1 | 113 | 8,5 | 46,8 | 46,8 | 6 | 14 | 20 |

**Table 2**

| Sample | PSD | | | | | bulk density |
|---|---|---|---|---|---|---|
| Nr. | d10 | d50 | d90 | <10 μm | (d90-d10)/d50 | [g/cm$^3$] |
| 1 | 24,96 | 59,38 | 145,4 | 0,55 | 2,03 | 39,8 |

**Example 4**

The powder of Example 3 was annealed at different temperatures (according to Table 3a) in a ventilated furnace (type Nabertherm N250/A) under nitrogen atmosphere for 3 hours. After the annealing, the powder was sieved with a 160 μm sieve on a vibration sieve of the type Perflux 501 (width of mesh: 150 μm, Siebtechnik GmbH, Mühlheim, Germany). The obtained powder values are given in Table 3a.

On a laser sintering system of type P800 (EOS P800 with Startup-Kit PAEK 3302 CF), test bodies were produced from the resulting three powders (primary powder) with processing parameters given in Table 3b. The layer thickness was 120 μm and was applied by using a double coating process (layer thickness 60 μm). The powders were analysed with respect to processability (process window) and the mechanical characteristics of the laser sintered parts. The values obtained are depicted in Table 3b and 3c.

**Table 3a**

| Sample | Annealing | MVR (primary powder) | PSD | | | | | bulk density | pourability | Teim (1st heat) | MVR (used powder) |
|---|---|---|---|---|---|---|---|---|---|---|---|
| Nr. | [°C] | [$cm^3$/10min] | d10 | d50 | d90 | < 10 μm | (d90-d10)/ d50 | [$m^2$/g] | [s] | [°C] | [$cm^3$/10min] |
| 1 | 265 | 52,1 | 22,7 | 50,2 | 105,7 | 0,6 | 1,65 | 39,8 | 6,3 | 268,0 | 47,2 |
| 2 | 270 | 51,5 | 23,8 | 53,2 | 108,8 | 0,4 | 1,60 | 39,5 | 6,3 | 271,4 | 45,0 |
| 3 | 275 | 54,3 | 24,3 | 54,2 | 112,4 | 0,3 | 1,36 | 39,2 | 9,6 | 276,2 | 46,3 |

**Table 3b**

| Sample | Energy input hatch | NCT | UBT | $T_{PK}$ |
|---|---|---|---|---|
| Nr. | [W*s/mm$^3$] | [°C] | [°C] | [°C] |
| 1 | 0,273 | 274 | 279 | 276 |
| 2 | 0,273 | 275 | 282 | 279 |
| 3 | 0,273 | 278 | 286 | 283 |

As can be seen, the Non-Curl temperature (NCT) is increased at a higher annealing temperature. Thus, the powders need to be built at a higher process chamber temperature (PK), which increases the ageing of the used powder (stronger drop of MVR value, see table 3a), which results in a worse refresh ratio with increasing heat treat temperature.

**Table 3c**

| Sample | Young's Modulus (xy) | Tensile strength (xy) | Elongation at break (xy) | Young's Modulus (zx) | Tensile strength (zx) | Elongation at break (zx) |
|---|---|---|---|---|---|---|
| Nr. | [MPa] | [MPa] | [%] | [MPa] | [MPa] | [%] |
| 1 | 3755 | 58 | 1,7 | 3737 | 40 | 1,1 |
| 2 | 3733 | 58 | 1,7 | 3668 | 41 | 1,2 |
| 3 | 3802 | 59 | 1,7 | 3883 | 46 | 1,2 |

The influence of thermal treatment on the mechanical properties are depicted. Tensile strength in z is increased at an annealing temperature of 275 °C.

**Example 5**

In Example 5, three PEKK types of different melt viscosities were produced in analogy to Example 4. Except, the polymerization time was adjusted (compared to Example 1) to obtain powders with different melt viscosities (MVR). Furthermore, the treatment temperature Tmax of the mixer of Example 2 was between 110-120°C. t2 was adapted for each powder, so that t1+t2 were always kept 25 minutes. The annealing temperature of Example 5 for all three powders was 265°C. The analytical data of the powders are shown in Table 4a.

Test bodies were produced on a laser sintering system of type P800 (EOS P800 with Startup-Kit PAEK 3302 CF) from the resulting three powders (primary powder) with processing parameters given in table 4b. The layer thickness was 120 $\mu$m and was applied by using a double coating process (layer thickness 60 $\mu$m). The powders were analyzed with respect to their processabbility (process window) and the mechanical characteristics of the laser-sintered parts. The values obtained can be found in Tables 4b and 4c.

**Table 4a**

| Sample | MVR | PSD | | | | | bulk density | $T_{eim}$ (1st heat) |
|---|---|---|---|---|---|---|---|---|
| Nr. | [cm$^3$/10min] | d10 | d50 | d90 | <10 $\mu$m | (d90-d10)/d50 | [g/cm$^3$] | [°C] |
| 1 | 13,3 | 23,1 | 52,1 | 95,9 | 0,6 | 1,40 | 37,7 | 267,2 |
| 2 | 24,3 | 25,0 | 53,4 | 88,7 | 0,6 | 1,19 | 33,1 | 267,4 |
| 3 | 58 | 23,0 | 54,0 | 119,1 | 0,5 | 1,78 | 43,3 | 267,3 |

**Table 4b**

| Sample | Energy input hatch | NCT | UBT | $T_{PK}$ |
|---|---|---|---|---|
| Nr. | [W*s/mm$^3$] | [°C] | [°C] | [°C] |
| 1 | 0,273 | 269 | 282 | 275 |

(continued)

| Sample | Energy input hatch | NCT | UBT | $T_{PK}$ |
|---|---|---|---|---|
| Nr. | [W*s/mm$^3$] | [°C] | [°C] | [°C] |
| 2 | 0,273 | 271 | 280 | 274 |
| 3 | 0,273 | 275 | 280 | 277 |

As seen in Tables 4a and 4b, the NCT is increased with increasing MVR value of the powder. This means, that the building temperature (Tpk) is at a higher temperature, which has a negative impact on the ageing and refreshing of the powder. Also, the process window (difference of UBT to NCT) is reduced from 13°C to only 5°C with increasing MVR of the powder.

**Table 4c**

| Sample | MVR | Young's Modulus (xy) | Tensile strength (xy) | Elongation at break (xy) | Young's Modulus (zx) | Tensile strength (zx) | Elongation at break (zx) |
|---|---|---|---|---|---|---|---|
| Nr. | [cm$^3$/ 10min] | [MPa] | [MPa] | [%] | [MPa] | [MPa] | [%] |
| 1 | 13,3 | 3484 | 96 | 3,8 | 3433 | 39 | 1,2 |
| 2 | 24,3 | 3419 | 85 | 3,1 | 3339 | 40 | 1,2 |
| 3 | 55,1 | 3851 | 73 | 2,1 | 4026 | 51 | 1,3 |

The influence of the melt viscosity on the mechanical properties is clearly seen in Table 4c. The tensile strength and elongation at break in xy direction strongly increases from 73 to 96 MPa and from 2,1 to 3,8 % with a lower MVR, whilst in z-direction the elongation at break is only slightly reduced from 1,3 to 1,2 %.

**Example 6**

In Example 6, two PEKK types with different particle size distributions were produced in analogy to Example 4. Except, the polymerisation time was adjusted (compared to Example 1) to obtain powders with an MVR of 24 cm$^3$/10min after heat treatment. Furthermore, the treatment temperature Tmax of the mixer of Example 2 was between 110-120 °C. t2 was adapted for each powder, so that t1+t2 was always kept 25 minutes. The annealing temperature of Example 6 was 265°C for both powders. The analytical data of the primary powder are shown in Table 5a.

**Table 5a**

| Sample | MVR | PSD | | | | | bulk density | pourability |
|---|---|---|---|---|---|---|---|---|
| Nr. | [cm$^3$/10min] | $d10_{dry}$ | $d50_{dry}$ | $d90_{dry}$ | <10 $\mu m_{dry}$ | (d90-d10)/d50 | [kg/cm$^3$] | [s] |
| 1 | 24 | 25,04 | 53,35 | 88,73 | 0,6 | 1,19 | 33,1 | 8 |
| 2 | 24 | 21,84 | 44,98 | 73,35 | 0,9 | 1,15 | 33,7 | 15 |

The influence of the particle size distribution on the flowability of the powder is clearly visible. The coarse powder shows a better flowability (pourability time is reduced from 15 to 8 seconds).

Test bodies were produced on a laser sintering system of type P800 (EOS P800 with Startup-Kit PAEK 3302 CF) from the resulting powders (50 % refreshed) with processing parameters given in Table 5b. The layer thickness was 120 $\mu$m and was applied by using a double coating process (layer thickness 60 $\mu$m). The powders were analysed with respect to the mechanical characteristics of the laser-sintered parts. The obtained values are depicted in Table 6.

**Table 5b**

| Sample | Energy input hatch | NCT | UBT | $T_{PK}$ |
|---|---|---|---|---|
| Nr. | [W*s/mm$^3$] | [°C] | [°C] | [°C] |
| 1 | 0,273 | 276 | 282 | 278 |
| 2 | 0,273 | 274 | 278 | 276 |

**Table 6**

| Sample | Refresh ratio of powder | Young's Modulus (xy) | Tensile strength (xy) | Elongation at break (xy) | Young's Modulus (zx) | Tensile strength (zx) | Elongation at break (zx) |
|---|---|---|---|---|---|---|---|
| Nr. | [%] | [MPa] | [MPa] | [%] | [MPa] | [MPa] | [%] |
| 1 | 50 | 3330 | 83 | 3,1 | 3183 | 50 | 1,7 |
| 2 | 50 | 3460 | 77 | 2,6 | 3620 | 50 | 1,5 |

It can be seen from Table 6, that the powder with the improved pourability of 8 sec shows improved tensile strength and elongation at break in x-y direction,

**Example 7**

In Example 7, a PEKK was produced as described in analogy to Example 5. Except, the polymerisation time was adjusted (compared to Example 1) to obtain a powder with an MVR of 22 cm$^3$/10min after heat treatment. Furthermore, the treatment temperature Tmax of the mixer from Example 2 was 116°C. t2 was adapted for the powder, so that t1+t2 was kept 25 minutes. The annealing temperature of Example 5 was 265°C.

**Table 7a**

| Sample | MVR | PSD | | | | | bulk density | pourability |
|---|---|---|---|---|---|---|---|---|
| Nr. | [cm$^3$/10min] | d10 | d50 | d90 | <10 μm | (d90-d10)/d50 | [g/cm$^3$] | [s] |
| 1 | 22,3 | 24,8 | 54,0 | 91,3 | 0,6 | 1,23 | 31,7 | - |

Test bodies were produced on a laser sintering system of type P800 (EOS P800 with Startup-Kit PAEK 3302 CF) from the resulting powder (primary powder) with processing parameters given in Table 7b with three different layer thicknesses of 120 μm, 100 μm and 60 μm, by applying a double coating process (layer thickness 60 μm, 50 μm and 30 μm, respectively). The different layer thicknesses were analysed with respect to the mechanical characteristics of the laser sintered parts. The values obtained are depicted in Table 7c.

**Table 7b**

| Trial | Layer thickness | Energy input hatch | $T_{PK}$ |
|---|---|---|---|
| Nr. | [μm] | [W*s/mm$^3$] | [°C] |
| 1 | 120 | 0,273 | 274 |
| 2 | 100 | 0,273 | 274 |
| 3 | 60 | 0,273 | 274 |

**Table 7c**

| Trial | Young's Modulus (zx) | Tensile strength (zx) | Elongation at break (zx) | Density of object |
|---|---|---|---|---|
| Nr. | [MPa] | [MPa] | [%] | [g/cm$^3$] |
| 1 | 3265 | 39 | 1,2 | 1,28 |
| 2 | 3400 | 49 | 1,5 | 1,29 |
| 3 | 3773 | 48 | 1,4 | 1,29 |

The influence on the mechanical properties and density of the parts in z-direction is clearly visible. When applying a reduced layer thickness of 100 μm and 60 μm, tensile strength and elongation at break in z-x direction is increased.

**Methods section:**

**Rounding by thermo-mechanical treatment**

Thermo-mechanical treatment of the polymer particles can be carried out preferably in a mixer, at a temperature of at least 30°C and below the melting point Tm of the polymer. A mixer that can be used is e.g. a Henschel mixer of the type FML, machine size 40 (Zeppelin Systems GmbH, Germany).

**Hausner ratio**

The Hausner ratio H provides information about the compressibility of a bulk material. The bulk density $\rho_{b0}$ of the uncompacted bulk material (according to the EN ISO-60) and the tap density $\rho_t$ (according to DIN EN ISO 787-11) are used for the determination.

$$H = \frac{\rho_t}{\rho_{b0}}$$

**Tap density**

The tap density is determined according to DIN EN ISO 787-11.

**Determination of the mechanical properties by means of tensile testing**

**Table 10**

| | Dimensions of the specimens | mm |
|---|---|---|
| $l_3$ | overall length | 60 |
| $l_1$ | Length of the narrow parallel part | 12 |
| r | radius | 40.5 |
| $l_2$ | Distance between the wide parallel sides | 40 |
| $b_2$ | Width at the ends | 10 |
| $b_1$ | Width of the narrow part | 5 |
| h | thickness | ≥2 |
| $L_0$ | measuring length | 10 |
| L | Initial distance of the terminals | $l_{2\,0}^{+2}$ |

The mechanical properties of the three-dimensional objects according to the invention can be determined on

the basis of test specimens as described below.

The test method and the component dimensions of the test specimens are of the standard DIN EN ISO 527-1: 2012-06 for the tensile test. For this purpose, the material testing machine TC-FR005TN.A50, dossier No.:605922 from Zwick with the software TestExpert II V3.6.

In the standardized tensile test, test results such as modulus of elasticity [GPa], tensile strength [MPa] and elongation at break with tensile specimens with dimensions from Table 10 were determined. The test speed is 5 mm / min for PEKK components. The E-Modulus is determined at a test speed of 1mm / min.

**Determination of the extrapolated starting temperature of the melting peak**

The material requires certain properties, which can be determined on the basis of the extrapolated starting temperature $T_{ei,\ m}$ by means of dynamic differential calorimetry, usually referred to DSC (Differential Scanning Calorimetry). The corresponding DSC measurements for the determination of $T_{ei,\ m}$ are preferably carried out according to the standard ISO 11357. The device is, for example, Mettler Toledo DSC 823. Also melting temperature $T_m$ and crystallization temperature $T_c$ are determined by this method. $T_{eim}$ and $T_m$ are determined from the first heating curve.

If the thermoplastic material contains or is a polymer of the class of PEKK, a temperature ramp of 0 ° C.-360 ° C.-0 ° C.-360 ° C. is deviated from the standard. The initial temperature (0 ° C), maximum temperature (360 ° C) and minimum temperature (0 ° C) are maintained for three minutes, but not at the final temperature (360 ° C). Furthermore, the heating or cooling rate is 20K / min and the weight in the measurements 4.5mg to 5.5mg.

**Optical methods for the determination of particle sizes and particle shape**

The measurement is carried out on the Camsizer XT device and the X-Jet module (Retsch Technology GmbH) with the associated software CamsizerXT64 (Version 6.6.11.1069). The optical methods for the determination of the particle sizes and particle shape are in accordance with standard ISO 13322-2. After determining the speed adjustment, the sample of about 2 g is dispersed with 80 kPa compressed air and passed through a 4mm wide passage on a calibrated optics unit with two different magnifying cameras ("Basic" and "Zoom"). For evaluation, at least 10000 individual images are recorded. In order to ensure good optical separation of the particles under consideration, images are only used if the areal density of the imaged particles is less than 3 % ("Basic" camera) or less than 5% ("Zoom" camera). The particle sizes and shapes are determined by means of defined measurement parameters. The determined size is the equivalent diameter of the coextensive circle of the particle projection $x_area = \sqrt{(4A/\pi)}$. The meridian or mean of this evaluation method is comparable to laser diffraction (reported as d10, d50, and d90, i.e., 10% quantile, 50% quantile, and 90% quantile of the volumetric particle size distribution). The measurement is repeated several times for statistical measurement formation.

For powders with high specific density > 2g / $cm^3$, or powders that are difficult to disperse, it may be necessary to adjust the method in terms of sample volume, dispersing pressure or the addition of 1% of the flow aid Alu C. The method is adapted in such a way that the variation of the sample quantity (up to 8 g) and the dispersion pressure (up to 150 kPa) is varied so that the smallest possible d90 is achieved.

The calibration and setting of the camera parameters are to be carried out device-specifically and the adjustment and maintenance are carried out according to the manufacturer's specifications. The following configuration of the Camsizer XT software was used:

## Konfiguration der CAMSIZER XT Software

CAMSIZER XT: 0301

| | | | | |
|---|---|---|---|---|
| Überlappungsbereiche: | x area: | 0.060 mm | bis | 0.160 mm |
| | xc min: | 0.060 mm | bis | 0.160 mm |
| | xFe min: | 0.060 mm | bis | 0.160 mm |
| | xFe max: | 0.060 mm | bis | 0.160 mm |
| | x area: | 0.100 mm | bis | 0.160 mm |
| | xc min: | 0.100 mm | bis | 0.160 mm |
| | xFe min: | 0.100 mm | bis | 0.160 mm |
| | xFe max: | 0.100 mm | bis | 0.160 mm |
| | x area: | 0.100 mm | bis | 0.160 mm |
| | xc min: | 0.100 mm | bis | 0.160 mm |
| | xFe min: | 0.100 mm | bis | 0.160 mm |
| | xFe_max: | 0.100 mm | bis | 0.160 mm |

☐ festes Verhältnis zwischen den Kameras für Berechnung

☑ Lichtquelle ausschalten

| | CCD - Basic | CCD - Zoom |
|---|---|---|
| Abbildungsmaßstab: | 72.2359 Pixel/mm | 633.1597 Pixel/mm |
| Vertikaler Abstand zur Rinne: | 37.0000 mm | 35.0000 mm |
| Mitte des Kalibrierbereichs: | 72.2347 Pixel/mm | 633.3091 Pixel/mm |

- Max. Dateianzahl für Mittelwert: 50
- Max. Dateianzahl für Anpassung 10
- ☑ Kommentare editieren
- ☐ Parameter aus 2. Messaufgabe übernehmen
- ☐ Parameter aus 2. Messaufgabe übernehmen
- ☐ Q0 und Q2 Anpassungsdateien erstellen
- ☑ Grenzwerte testen
- ☑ Mehrere x-Definitionen
- ☑ Mv(x), Sigma(x) berechnen
- ☐ p2, Q2, q2 berechnen
- ☐ p2_Sv berechnen
- ☐ Klassenabhängige Q(Schwelle) berechnen
- ☑ Automatische Bildspeicherung freischalten
- ☐ relativen Dichte rD berechnen
- ☐ Waage für rD freischalten
- ☐ Sehnenlängenverteilung berechnen
- Minimaler Rinnensteuerwert 0
- ☐ Externe Steuerung über COM-Port
- ☐ Automatische Trendanalyse freischalten
- Genauigkeit in Tabelle, Stellen: 2
- ☑ Zoomen des Diagramms in Y-Richtung
- ☑ Q3-Größengrenzen setzen
- ☐ Q0-Größengrenzen setzen
- ☐ Q2-Größengrenzen setzen
- ☐ AFS-Nummer berechnen
- ☐ CV, MA berechnen
- ☐ SGN, UI berechnen
- ☐ PI berechnen
- ☐ Beta für RRSB berechnen

- ☐ Reisbruchkenngrößen berechnen
- ☐ Q(V) berechnen
- ☐ Q3_MVH berechnen
- ☐ xmax(q3), xmax(q0) suchen
- ☐ Automatische Trichtereinstellung freischalten
- ☐ Hochpositionieren des Trichters freischalten
- ☐ Hintergrund während der Messung aktualisieren
- Intervall [s]: 0
- ☐ abgesetzte Rinne
- Abweichung [mm]: 10.0
- ☑ Grenzen der Formkenngrößen setzen
- ☑ Maximale Flächendichte setzen
- ☐ Ausrichtung und Segregation testen
- ☐ Teilbildauswertung
- Anzahl Richtungen für Formkenngrößen: 32
- Glättungsfaktor für xFe, xMa, xc: 1
- Glättungsfaktor für Q(xc_min), Q(xFe_min), Q(xFe_max): 1.8000
- ☑ SPHT anpassen
- ☑ Wichtung der Formdaten der CCD-Zoom wie CCD-Basic
- ☑ Ellipsoidmodell für Q(xc_min), Q(xFe_min), Q(xFe_max): l, b, b
- ☐ Konkave Partikel konvex machen
- Max. Anzahl der Suchschritte: 0
- Suchwiederholungen: 0
- Partikelformeinstellungen: In Messaufgabe auswählen
- ☐ xFe, xMa, xc Korrektur
- ☐ xFe, xMa, xc Korrektur (Kugel)
- ☐ Korrektur von b/l, B/L, ... (Kugel)

## Konfiguration der CAMSIZER XT Software

CAMSIZER XT: 0301

- [ ] Präsentationsmodus
- [ ] mit Helligkeitskorrektur
- [ ] Binärbilder
- [ ] Mit Kontur
- [x] CAMSIZER XT Bildpräsentation

- [x] Kombinierte Kenngrößen
- [x] Unscharfe Partikel ignorieren
- [x] Kopieren und Exportieren der Dateien in UNICODE
- [x] Kombinieren von Siebung und CAMSIZER XT Messung
- [x] Automatischer Helligkeitstest
- [x] Automatische Kopie von Messaufgaben freischalten
- [x] Kalibrierung im Messmodus freischalten
- [ ] Erstellung und Auswertung von Binärdateien freischalten
- [x] Reihenmessung freischalten
- [ ] Berechnung der mittleren Korngröße DM-CECA und TG freischalten

Sicherheits-Software

- [ ] Dateiüberschreibung im Administratormodus freischalten
- [ ] Nach Programmende von WINDOWS abmelden

Randfehlerkorrektur: elliptisch, Q(x) und Form

- [ ] q(x) ohne Glättung berechnen
- [ ] Partikelzählung freischalten
- [ ] Messung ohne CCD-Basic
- [ ] Messung ohne CCD-Zoom
- [x] Klassenabhängige Mittelwerte der Formkenngrößen berechnen
- [x] Korrektur unscharfer Kanten
- [x] Erweiterte XLD- und XLE-Exportdateien
- [ ] Editieren der Probenmasse freischalten
- [ ] Ul_gkl(Q1,Q2) berechnen

Anpassung konfigurieren

- [x] Q3(x)-Anpassung
- [ ] Q0(x)-Anpassung
- [ ] Q2(x)-Anpassung
- [x] eine Siebklasse
- [ ] eine Siebklasse, unter Verwendung der symmetrischen Weibullverteilung
- [ ] eine Siebklasse, unter Verwendung der Weibullverteilung
- [x] eine Siebklasse und gesamte Verteilung
- [x] Gesamtverteilung, unter Anwendung der symmetrischen Weibull-Verteilung

Datumsformat: automatisch

- [ ] Leitblech und Rinnenbreite beim ersten Messstart nach Softwarestart anzeigen

Maximale Klassenanzahl: 300

- [ ] Kommentare im Messmodus editieren

- [x] Höhere Genauigkeit der x-Werte
- [ ] Mv(x)-Werte berechnen
- [ ] Rundheit berechnen
- [ ] Rundheit im Parametermodus konfigurieren

Einstellungen für Rundheit

- [x] xc_min verwenden
- [ ] x_inner verwenden

| | |
|---|---|
| sub für RDNS_C | 0.1744 |
| div für RDNS_C | 0.6718 |
| sub für SPHT_K | 0.2892 |
| div für SPHT_K | 0.6714 |

Zeit zwischen Unterdruck und Dispergierung [ms]: 800

| Kameras (Messparameter) | |
|---|---|
| ☑ CCD-Basic: | |
| Schwellenab- | |
| für Partikel-größen | |
| kleiner als [mm]: | 0.0023 |
| größer als [mm]: | 20 |
| für Formkenngrößen | |
| kleiner als [mm]: | 0.0023 |
| größer als [mm]: | 20 |
| ☑ CCD-Zoom: | |
| Schwellenab- | |
| für Partikel-größen | |
| kleiner als [mm]: | 0.0023 |
| größer als [mm]: | 2 |
| für Formkenngrößen | |
| kleiner als [mm]: | 0.0023 |
| größer als [mm]: | 2 |

| | |
|---|---|
| Bildrate: | 100% (1:1) |
| ☑ Warnung, falls Bildrate < | 0.95 |
| Intervall der Anzeige: | 80 |
| ☑ Transparente Partikel ausfüllen | |

**Determination of the lower building temperature (NCT)**

The lower building temperature (also non-curl temperature = NCT) is determined by means of a cross test, e.g. a matrix of cross-shaped test components (4x2 on the smaller construction platform of P800 Fig 1.) determined. For this purpose, the laser sintering machine is warmed to a temperature of about 10 ° C (estimated) below the usual building temperature or alternatively about 5 ° C below the expected non-curl temperature. After automatic powder application, a layer of crosses is exposed from a height of z = 3 mm. Show these strong process-critical curl, e.g. the edges of the exposed test crosses are significantly upwards, the crosses are removed from the installation space and the temperature is raised by 2 ° C. After applying 1.2 mm powder layers (P800, 10 layers of 0.12 mm layer thickness or 12 layers at 0.10 mm layer thickness or 20 layers at 0.06 mm layer thickness), the test is repeated. If only little curl can be observed, the temperature is further increased in 1 ° C increments until no more process-critical curl is observed in the cross-test. That is, the crosses can be built in full height (1.2 mm height) without being torn out of the powder bed by the coater during the coating process. The temperature at which no process-critical curl is observable is called the non-curl temperature and defines the lowest possible building temperature. Figure 1 shows the position of the cross-shaped test components and the pyrometer measuring spot ("P", top right) on the EOS P800 with installation space reduction (left).

The term "no process-critical curl" means that no curl can be observed or only minimal curl, but which occurs to such a low degree that the coater can no longer tear the exposed crosses out of the powder bed during powder application.

**Determination of upper building temperature (UBT)**

The maximum building temperature is the building temperature of the powdery material, in which the powdery material just does not stick, so that form no aggregates of powder particles, and the powdery material for the coating process is still sufficiently flowable and there are no coating defects (e.g. banding by agglomerates). The maximum processing temperature depends in particular on the type of powdery material used.

However, the maximum building temperature can also be reached if it just does not come to the (local) melt

film formation of the powder, which can be seen on a glossy film (e.g. polyamide 12, PA2200) or a local dark colour of the powder (e.g. EOS PEEK-HP3 described in the application manual).

For determination, the process chamber temperature is gradually increased (1-2 ° C.) after the determination of the lower building temperature and the powder bed is precisely observed when one of the effects described above occurs. Additionally or alternatively, the upper building temperature can be determined by determining the powder bed hardness by means of a Shore measurement. This can be helpful if one of the effects described above does not yet occur. If the unsintered powder bed is too hard after the end of the building process it is no longer possible to separate exposed components from the unsintered powder. This restricts the accuracy of the components. For this purpose, when the observed or assumed upper building temperature is reached, the process chamber temperature is lowered by 1 ° C and another layer of 3 mm powder is applied as a top layer in automatic construction operation. After the construction process, the powder cake is cooled to room temperature. The surface of the cooled powder cake is determined in the interchangeable frame in the machine by means of a suitable Shore hardness measuring device (here: Bareiss HPII) on a matrix on the smaller construction platform of P800 (5x2 in xy, Fig. 2) in the middle of each sector. The value for Shore hardness results as average value from the 50% highest measured values of the matrix. If there is a crack in the powder bed in the region of the point to be measured (due to the loss of powder cake due to the cooling process to room temperature), then the measured value in the respective sector must be detected at a sufficient distance approx.15 mm from the crack. The Shore hardness for the upper building temperature depends in particular on the type of powdery material used. How high this is depends on the respective material and on the requirements of component quality and waste powder recycling. Suitably, the same Shore hardness for the upper building temperature is used as a comparison. That for all equally proportionate refreshments this is always essentially the same. Furthermore, preference should be given to no change in the heating distribution of the laser sintering machine between the powders to be compared, since this can have an effect on the determined Shore hardness value.

Which Shore hardness measurement is suitable for which powder can be determined. Shore hardness of Shore 00, Shore 000 and Shore 000 S, which is also regulated in ASTM D 2240, have proven to be preferred.

These and other hardness tests according to Shore are described in the Bareiss HPII Operating Instructions (HPE II Shore [D], Version 26.05.2017) and the corresponding standards are listed. By way of example, for some polymer powders, the Shore hardnesses for the upper building temperature have been determined with the Bareiss HPII Shore Hardness Tester:

1) Polyaryletherketone

Shore-00 = 85

**Working temperature ($T_{PK}$)**

The processing temperature, represented by the process chamber temperature $T_{PK}$, is preferably chosen such that it is at least 1 ° C, more preferably at least 2 ° C and even more preferably at least 4° C above the lower building temperature of the powder and / or at most at the top Building temperature, more preferably at most 1 ° C, even more preferably at most 2 ° C and even more preferably at most 4 ° C below the upper building temperature. Preferably, the processing temperature is above the lower building temperature and below the upper building temperature of the powder. Sufficient process security (no curling, by the greatest possible distance from the NCT) has to be assured. Furthermore, the temperature has to be as high as possible, without causing a sticking of the powdery material.

Alternatively or additionally, the processing temperature for each powder can be determined by determining the Shore hardness of the cooled powder cake, according to the method described under Upper Building Temperature Determination (UBT). The Shore hardness value should preferably be 5% and at most 50% below the Shore hardness value of the UBT. Preferably at most 15% below, more preferably at most 10% below.

**Production of components on the laser sintering machine**

If the thermoplastic material contains or is a polymer of the polyaryletherketone (PAEK) class, in particular PEKK, the experiments were carried out on a modified P800 (EOS P800 with start-up kit PAEK 3302 CF) with PSW 3.8. After a warm-up phase, during which the process chamber of the laser sintering machine is warmed from room temperature to the specified building temperature or the start temperature of the temperature search within 120 minutes, 50 layers (with a layer thickness of 120 μm) or 60 layers (with a layer thickness of 100 μm) or 120 layers (with layer thickness of 60μm) are laid without exposure as the bottom layer (= 6 mm). After laying the bottom layer, the 6 tensile specimens (dimensions see table 1) are positioned next to each other in the middle of the construction field, with the parallel length aligned parallel to the x-direction and 4 cuboid test components (dimensions: 20 mm x 4 mm x 13.56 mm), positioned to the left and right of the tensile specimens. Between the components in the z direction layers are laid without exposure.

At z = 9,960 mm, the 25 tensile specimens (positioned centrally in the construction field next to each other, aligned with the parallel length parallel to the z-direction) are built. Following the last exposed layer, another 3 mm powder is automatically applied and the machine is cooled to 180 ° C within about 8 hours by means of a controlled cooling phase, which is defined in the default job, before the heaters are completely switched off. After reaching room temperature, the components were manually removed, glass bead blasted and measured / tested. Figures 3 and 4 show the positions of tensile specimens in the x-direction, z-direction and powder boxes as well as density cubes on the EOS P800.

The size of the building area is about 350 mm x 120 mm (about ⅛ of the full platform size, modified construction space reduction variant 1 for P800 in the xy direction in accordance with the EOS PEEK-HP3 application manual).

The job height is 72.96mm.

The following settings were selected:

- Process chamber temperature during construction of the parts is detailed in the Examples section;
- Temperature of the removable frame / building platform: 255 °C (for PEKK);
- Default job settings: PAEK3302CF;
- Exposure parameters: volume energy input as described in the Examples section.

## Claims

1. Composition comprising
at least one polymer,
wherein the polymer is in the form of a powder, and
wherein the polymer comprises at least one thermoplastic polymer,
wherein the thermoplastic polymer is selected from at least one polyaryletherketone as well as a copolymer and/or block-copolymer and/or a polymer blend thereof,
wherein the composition has a melt volume rate (MVR) of at least 5 $cm^3$/10 min, more preferred at least 10 $cm^3$/10 min, and/or not more than 55 $cm^3$/10 min, preferably not more than 40 $cm^3$/10 min, more preferred not more than 30 $cm^3$/10 min, particularly preferred not more than 26 $cm^3$/10 min, mostly preferred not more than 24 $cm^3$/10 min.

2. Composition according claim 1, wherein the at least one polyaryletherketone is selected from the group of polyetherketoneketone (PEKK), from the group of polyetheretherketone (PEEK), from the group of copolymers of PEKK and from the group of copolymers of PEEK.

3. Composition according to any of the preceding claims, wherein the polymer comprises at least one semicrystalline polymer, preferably one semicrystalline copolymer and/or a semicrystalline polymer blend,
and/or
at least one amorphous polymer, preferably an amorphous copolymer and/or an amorphous polymer blend.

4. Composition according to any of claims 2 to 3, wherein the polyetherketoneketone comprises the following repeat units

repeat unit A

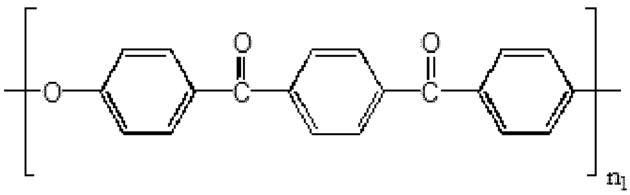

repeat unit B

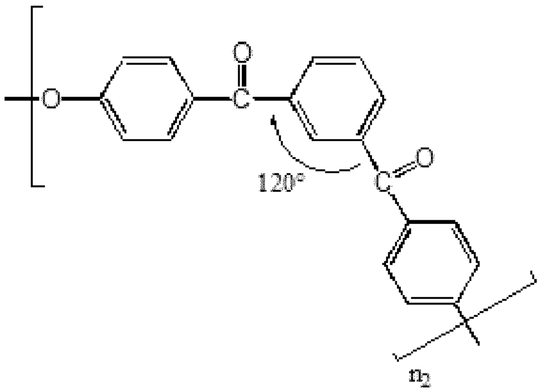

wherein the ratio of the repeat unit A to the repeat unit B is preferably between approx. 80:20 to 10:90, preferably 70:30 to 40:60, particularly preferred 60:40.

**5.** Composition according to any of claims 1 to 4, wherein the polyaryletherketone has a melting temperature Tm of at least about 250 °C, preferably at least about 260 °C, particularly preferred at least about 270 °C, and/or up to about 320 °C, preferably of up to about 310 °C, particularly of up to about 300 °C, and/or wherein the polyaryletherketone has a glass transition temperature Tg of at least about 120 °C, preferably of at least about 140 °C, particularly preferred of at least about 150 °C and/or not more than about 200°C, preferably not more than about 180°C, particularly preferred not more than about 170°C..

**6.** Composition according to any of claims 2 to 5, wherein the polyetherketoneketone (PEKK) has an extrapolated starting temperature of melting $T_{eim}$ of at least 250 °C, preferably at least 260 °C, particularly preferred at least 265 °C, and/or up to 285 °C, preferably of up to 280 °C, particularly of up to 275 °C.

**7.** Composition according to any of claims 2 to 6, having a process window, of at least about 1 °C, preferably at least about 3 °C, more preferably at least about 5 °C and most preferably at least about 9 °C, and/or not more than about 200 °C, preferably not more than about 100 °C, more preferably not more than about 50 °C.

**8.** Composition according to any of claims 1 to 7, wherein the polymer blend comprises a polyaryletherketone-polyetherimide.

**9.** Composition according to any of the preceding claims, wherein the polymer particles of the composition have a particle size distribution as follows:

- d10 = at least 10 μm, preferably at least 20 μm and/or not more than 50 μm, preferably not more than 40 μm
- d50 = at least 25 μm and/or not more than 100 μm, preferably at least 30 μm and/or not more than 80 μm, in particular of at least 40 μm and/or not more than 60 μm
- d90 = at least 50 μm and/or not more than 150 μm, preferably not more than 120 μm.

**10.** Composition according to any of the preceding claims, wherein the polymer particles of the composition have a particle size distribution as follows:

- d10 = at least 15 μm, preferably at least 20 μm, in particular at least 25 μm and/or not more than 50 μm, preferably not more than 40 μm in particular not more than 30 μm
- d50 = at least 40 μm and/or not more than 100 μm, preferably at least 45 μm and/or not more than 80 μm, in particular of at least 50 μm and/or not more than 65 μm
- d90 = at least 70 μm and/or not more than 150 μm, preferably at least 80 μm and/or not more than 120 μm, most preferably not more than 110 μm;

wherein the polymer particles are obtained by milling of polymerisation flakes.

**11.** Composition according to any of the preceding claims, wherein the composition has a distribution width (d90-d10)/d50 of not more than 3, preferably of not more than 2, particularly of not more than 1.5, particularly preferred of not more than 1.

**12.** Composition according any of the preceding claims, wherein the polymer particles have a sphericity of at least about 0,8, preferably of at least about 0,85, particularly preferred of at least about 0,90 and mostly preferred of at least about 0,95.

**13.** Composition according to any of the preceding claims, having a pourability of at least about 1 sec, preferably of at leat about 2 sec, most preferably of at least about 3 sec and/or not more than about 12 sec, preferably not more than about 9 sec, most preferably not more than about 8 sec

**14.** Composition according any of the preceding claims, wherein the composition has a Haussner Factor of at least 1.01 and/or not more than 1.7, preferably not more than about 1.5, more preferably not more than about 1.4, particularly preferred not more than about 1.3, even more preferred not more than about 1.2, mostly preferred not more than about 1.18.

**15.** Composition according any of the preceding claims, wherein the composition comprises at least one flow agent.

**16.** Composition according to claim 15, wherein the content of the at least one flow agent in the composition is not more than about 1 wt.-%, preferably not more than about 0,5 wt.-%, particularly preferred not more than about 0,2 wt.-%, particularly not more than about 0,15 wt.-%, mostly preferred not more than about 0,1 wt.-%.

**17.** Composition according any of the preceding claims, wherein the composition has a BET-surface of at least about 0,1 $m^2$/g and/or not more than about 10 $m^2$/g, preferably not more than 5 $m^2$/g, more preferably not more than 2 $m^2$/g, particularly preferred not more than 1,5 $m^2$/g, mostly preferred not more than 1 $m^2$/g.

**18.** Process for the manufacture of a composition according to any of claims 1 to 17, wherein the process comprises the following steps:

(i) providing at least one thermoplastic polymer, wherein the thermoplastic polymer is selected from at least one polyaryletherketone and/or a copolymer and/or block-copolymer and/or a polymer blend thereof,
(ii) optionally grinding the polymer,
(iii) optionally rounding of the polymer particles, preferably by thermo-mechanical treatment, in a mixer), at a temperature of at least 30°C and below the melting point Tm of the polymer.

**19.** Process for the manufacture of a composition according to claim 18, wherein the process further comprises the following step of annealing the composition at a temperature above Tg and below Tm, preferably in an oven.

**20.** Process for the manufacture of a construction element, preferably of a 3D object, comprising the steps:

(i) applying a layer of a composition according to any of claims 1 to 17 and/or a composition manufactured according to any of claims 18 to 19, preferably of a powder, onto a production panel,
(ii) selectively solidify the applied layer of the composition at sites representing a cross section of the object to be manufactured, preferably by using an irradiation unit, and
(iii) lowering the carrier and repeating the steps for applying and solidifying until the construction element, preferably the 3D object, is finished.

**21.** Process for the manufacture of a construction element, preferably of a 3D object, according to claim 20,
wherein step i) of applying the layer is applied by at least a double coating,
wherein applying of the layer is subdivided into a step of applying a first layer having a first height H1 and a step of applying a second layer having a second height H2,
wherein the second layer of height H2 is applied onto the first layer of height H1, preferably wherein the height H1 of the first layer equals the height H2 of the second layer.

**22.** Composition according to any of claims 1 to 17, wherein the composition is obtained by a process according to any of claims 18 to 19.

**23.** Construction element, preferably 3D object, comprising a composition according to any of claims 1 to 17, wherein the construction element is preferably obtained by a process according to claim 20 or 21.

**24.** Use of a composition according to any of claims 1 to 17, preferably manufactured by a process according to any of claims 18 to 19, for additive manufacturing, preferably from the group of powder bed based processes comprising laser sintering, high-speed sintering, binder jetting, selective mask sintering, selective lasers melting, in particular for the use of laser sintering.

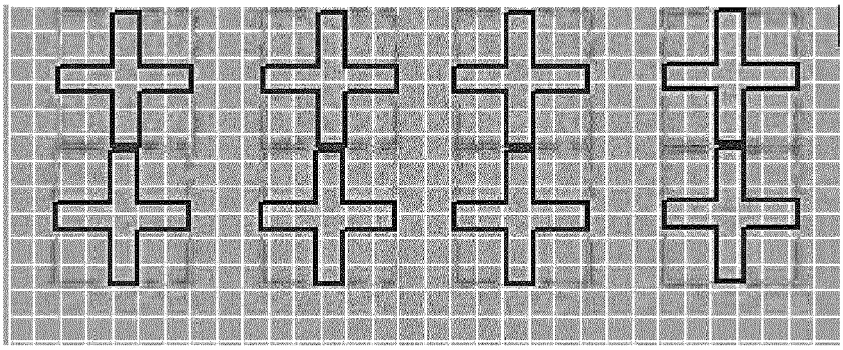

Fig.1

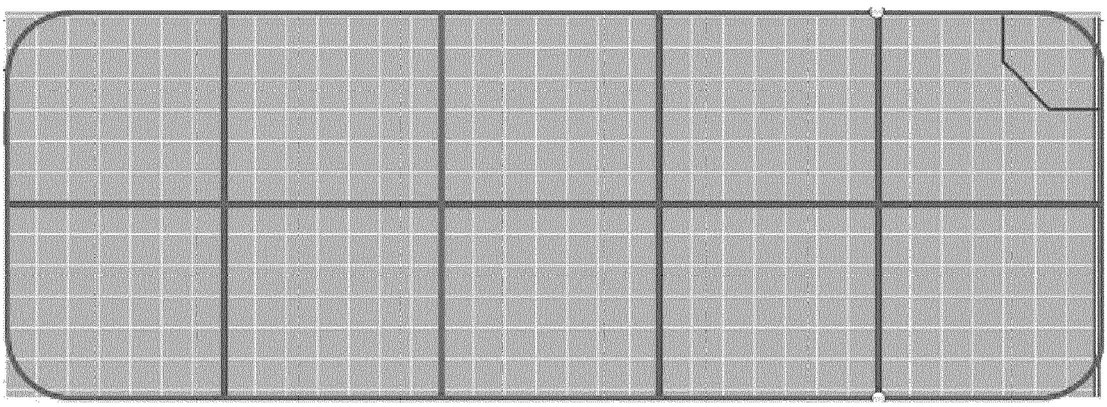

Fig.2

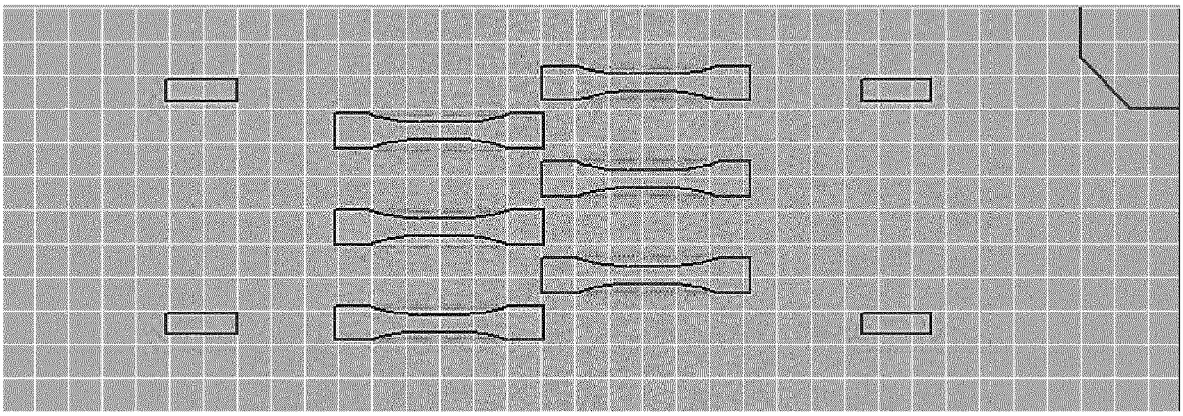

Fig.3

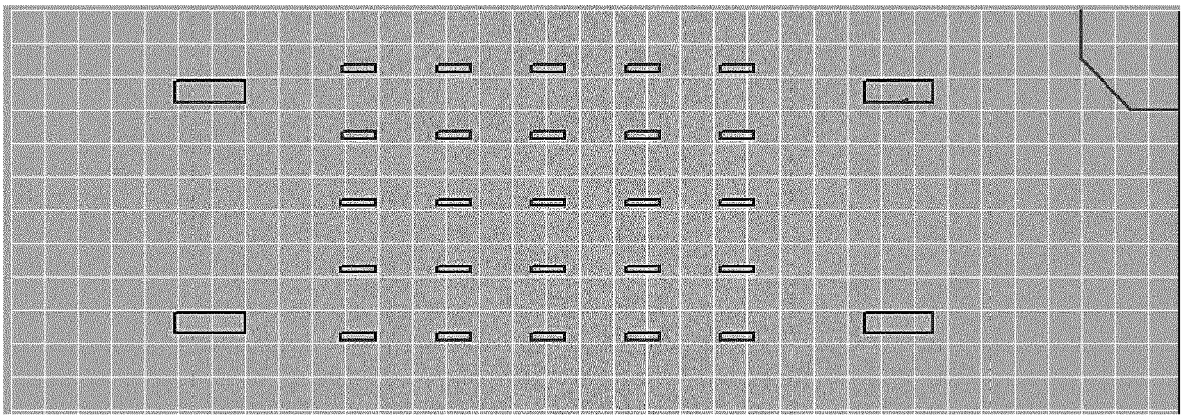

Fig.4

Europäisches Patentamt
European Patent Office
Office européen des brevets

# EUROPEAN SEARCH REPORT

Application Number
EP 19 30 6489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/338119 A1 (QI XINGCHAO [CN] ET AL) 7 November 2019 (2019-11-07) * paragraph [0001] - paragraph [0095]; claims 1-30; examples * | 1-24 | INV. C08G65/40 B29B13/02 B29C67/04 B33Y70/00 C08J3/12 C08J5/12 C08L71/00 C08L71/12 |
| X | WO 2013/085947 A1 (OXFORD PERFORMANCE MATERIALS LLC [US]) 13 June 2013 (2013-06-13) * page 1, line 10 - page 8, line 2; claims 1-13; examples * | 1-7,9-24 | |
| X | WO 2017/116885 A1 (ARKEMA INC [US]) 6 July 2017 (2017-07-06) * page 1, line 6 - page 6, line 35; claims 1-20; examples * | 1-7,9-24 | |
| X | WO 2017/149233 A1 (ARKEMA FRANCE [FR]) 8 September 2017 (2017-09-08) * paragraph [0001] - paragraph [0041]; claims 1-15; examples * | 1-7,9-24 | |
| X | US 2018/200922 A1 (DEFELICE SCOTT [US] ET AL) 19 July 2018 (2018-07-19) * paragraph [0002] - paragraph [0063]; claims 1-16; examples * | 1-7,9-24 | TECHNICAL FIELDS SEARCHED (IPC) C08G C08J B33Y B29C B29B C08L |
| X | WO 2018/115033 A1 (SOLVAY SPECIALTY POLYMERS USA [US]) 28 June 2018 (2018-06-28) * page 1, line 8 - page 18, line 23; claims 1-15; examples * | 1-7,9-24 | |
| X | WO 2016/089509 A2 (ARKEMA INC [US]) 9 June 2016 (2016-06-09) * page 1, line 4 - page 8, line 31; claims 1-24; examples * | 1-7,9-24 | |

-/--

The present search report has been drawn up for all claims

1

| Place of search | Date of completion of the search | Examiner |
|---|---|---|
| The Hague | 19 May 2020 | Kiebooms, Rafaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 19 30 6489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 012 297 A1 (ARKEMA FRANCE [FR]) 27 April 2016 (2016-04-27) * paragraph [0001] - paragraph [0034]; claims 1-6; examples * ----- | 1-7,9-24 | |
| X | WO 90/06957 A1 (DU PONT [US]) 28 June 1990 (1990-06-28) * page 1, line 5 - page 12, line 12; claims 1-20; examples * ----- | 1-7,9-24 | |
| X | US 2016/122527 A1 (DECRAEMER NADINE [FR] ET AL) 5 May 2016 (2016-05-05) * paragraph [0001] - paragraph [0028]; claims 1-9; examples * ----- | 1-7,9-24 | |

TECHNICAL FIELDS SEARCHED (IPC)

The present search report has been drawn up for all claims

1

| Place of search | Date of completion of the search | Examiner |
|---|---|---|
| The Hague | 19 May 2020 | Kiebooms, Rafaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 19 30 6489

This annex lists the patent family members relating to the patent documents cited in the above-mentioned European search report. The members are as contained in the European Patent Office EDP file on
The European Patent Office is in no way liable for these particulars which are merely given for the purpose of information.

19-05-2020

| Patent document cited in search report | Publication date | Patent family member(s) | Publication date |
|---|---|---|---|
| US 2019338119 A1 | 07-11-2019 | CN 108250668 A | 06-07-2018 |
| | | CN 109804001 A | 24-05-2019 |
| | | JP 2020506980 A | 05-03-2020 |
| | | KR 20190100242 A | 28-08-2019 |
| | | US 2019338119 A1 | 07-11-2019 |
| WO 2013085947 A1 | 13-06-2013 | EP 2788170 A1 | 15-10-2014 |
| | | US 2013217838 A1 | 22-08-2013 |
| | | US 2018243979 A1 | 30-08-2018 |
| | | US 2020147871 A1 | 14-05-2020 |
| | | WO 2013085947 A1 | 13-06-2013 |
| WO 2017116885 A1 | 06-07-2017 | BR 112018010987 A2 | 04-12-2018 |
| | | CN 108367459 A | 03-08-2018 |
| | | EP 3397441 A1 | 07-11-2018 |
| | | JP 2019502004 A | 24-01-2019 |
| | | KR 20180099802 A | 05-09-2018 |
| | | WO 2017116885 A1 | 06-07-2017 |
| WO 2017149233 A1 | 08-09-2017 | EP 3423510 A1 | 09-01-2019 |
| | | FR 3048430 A1 | 08-09-2017 |
| | | US 2019062498 A1 | 28-02-2019 |
| | | WO 2017149233 A1 | 08-09-2017 |
| US 2018200922 A1 | 19-07-2018 | CN 110041539 A | 23-07-2019 |
| | | CN 110041686 A | 23-07-2019 |
| | | US 2018200922 A1 | 19-07-2018 |
| | | US 2018201783 A1 | 19-07-2018 |
| WO 2018115033 A1 | 28-06-2018 | NONE | |
| WO 2016089509 A2 | 09-06-2016 | BR 112017009179 A2 | 30-01-2018 |
| | | CN 107075215 A | 18-08-2017 |
| | | EP 3215564 A2 | 13-09-2017 |
| | | JP 2017535643 A | 30-11-2017 |
| | | KR 20170081198 A | 11-07-2017 |
| | | US 2017306075 A1 | 26-10-2017 |
| | | WO 2016089509 A2 | 09-06-2016 |
| EP 3012297 A1 | 27-04-2016 | BR 112017007941 A2 | 19-12-2017 |
| | | CA 2965371 A1 | 28-04-2016 |
| | | CN 107001787 A | 01-08-2017 |
| | | EP 3012297 A1 | 27-04-2016 |
| | | EP 3209729 A1 | 30-08-2017 |
| | | ES 2638654 T3 | 23-10-2017 |
| | | ES 2711305 T3 | 03-05-2019 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 19 30 6489

This annex lists the patent family members relating to the patent documents cited in the above-mentioned European search report. The members are as contained in the European Patent Office EDP file on
The European Patent Office is in no way liable for these particulars which are merely given for the purpose of information.

19-05-2020

| Patent document cited in search report | Publication date | Patent family member(s) | Publication date |
|---|---|---|---|
| | | FR 3027603 A1 | 29-04-2016 |
| | | JP 6505219 B2 | 24-04-2019 |
| | | JP 2017531726 A | 26-10-2017 |
| | | JP 2019112640 A | 11-07-2019 |
| | | KR 20170063961 A | 08-06-2017 |
| | | RU 2017115887 A | 23-11-2018 |
| | | US 2016115314 A1 | 28-04-2016 |
| | | US 2017335101 A1 | 23-11-2017 |
| | | US 2019203044 A1 | 04-07-2019 |
| | | WO 2016062558 A1 | 28-04-2016 |
| WO 9006957 A1 | 28-06-1990 | AT 111121 T | 15-09-1994 |
| | | AU 627807 B2 | 03-09-1992 |
| | | CA 2004957 A1 | 13-06-1990 |
| | | DE 68918112 D1 | 13-10-1994 |
| | | DE 68918112 T2 | 13-04-1995 |
| | | DK 110891 A | 11-06-1991 |
| | | EP 0448570 A1 | 02-10-1991 |
| | | JP H0662791 B2 | 17-08-1994 |
| | | JP H04502635 A | 14-05-1992 |
| | | KR 910700280 A | 14-03-1991 |
| | | NO 174750 B | 21-03-1994 |
| | | US 4996287 A | 26-02-1991 |
| | | WO 9006957 A1 | 28-06-1990 |
| US 2016122527 A1 | 05-05-2016 | EP 3004220 A1 | 13-04-2016 |
| | | FR 3006317 A1 | 05-12-2014 |
| | | US 2016122527 A1 | 05-05-2016 |
| | | US 2018148572 A1 | 31-05-2018 |
| | | WO 2014191675 A1 | 04-12-2014 |

EPO FORM P0459

For more details about this annex : see Official Journal of the European Patent Office, No. 12/82